(19) Europäisches Patentamt
European Patent Office
Office européen des brevets

(11) **EP 2 529 212 B1**

(12) **FASCICULE DE BREVET EUROPEEN**

(45) Date de publication et mention de la délivrance du brevet:
**18.07.2018 Bulletin 2018/29**

(21) Numéro de dépôt: **10796081.7**

(22) Date de dépôt: **28.12.2010**

(51) Int Cl.:
*G01N 27/90* *(2006.01)*        *G06F 17/50* *(2006.01)*

(86) Numéro de dépôt international:
**PCT/EP2010/070818**

(87) Numéro de publication internationale:
**WO 2011/091932 (04.08.2011 Gazette 2011/31)**

(54) **PROCEDE D'ESTIMATION DE DEFAUTS DANS UN OBJET ET DISPOSITIF DE MISE EN OEUVRE**

VERFAHREN UND VORRICHTUNG ZUR SCHÄTZUNG VON DEFEKTEN IN EINEM WERKSTÜCK

METHOD FOR EVALUATIONG DEFECTS IN AN OBJECT AND CORRESPONDING APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.01.2010  FR 1050514**

(43) Date de publication de la demande:
**05.12.2012  Bulletin 2012/49**

(73) Titulaire: **CENTRE NATIONAL DE LA RECHERCHE SCIENTIFIQUE -CNRS- 75016 Paris (FR)**

(72) Inventeurs:
 • **PLACKO, Dominique**
   **F-94000 Creteil (FR)**
 • **JOUBERT, Pierre-Yves**
   **F-92330 Sceaux (FR)**
 • **RIVOLLET, Alain**
   **F-78350 Jouy en Josas (FR)**

(74) Mandataire: **Pontet Allano & Associes Parc Les Algorithmes, Bâtiment Platon CS 70003 Saint-Aubin 91192 Gif-sur-Yvette Cedex (FR)**

(56) Documents cités:
**WO-A1-2004/044790      WO-A1-2005/001467 WO-A1-2007/135265**

• **N. LIÉBEAUX, D. PLACKO: "The DPSM method and its application to NDE problems with intefaces modelling", EUR. PHYS. J. APPL. PHYS., vol. 38, 2007, pages 283-286, XP002602974,**
• **LE DIRAISON Y ET AL: "Characterization of subsurface defects in aeronautical riveted lap-joints using multi-frequency eddy current imaging", NDT & E INTERNATIONAL, BUTTERWORTH-HEINEMANN, OXFORD, GB LNKD- DOI:10.1016/J.NDTEINT.2008.10.005, vol. 42, no. 2, 1 mars 2009 (2009-03-01), pages 133-140, XP025916339, ISSN: 0963-8695 [extrait le 2008-11-01]**
• **ADEL ZITOUNI ET AL: "Modeling of Intelligent Electromagnetic Sensor for Buried Tags", IEEE INDUSTRIAL ELECTRONICS, IECON 2006 - 32ND ANNUAL CONFERENCE ON, IEEE, PISCATAWAY, NJ, USA, 1 novembre 2006 (2006-11-01), pages 2921-2926, XP031076941, ISBN: 978-1-4244-0135-2**

**Description**

L'invention concerne un procédé d'estimation quantitative de défauts présents dans des objets ou des structures, à partir de mesures de grandeurs physiques réalisées en surface, afin de permettre une évaluation non destructive (END).

Aujourd'hui, les dispositifs de contrôle non destructifs nécessitent généralement l'éclairage d'un objet par une onde caractérisée par une ou plusieurs grandeurs physiques (champ magnétique, électrique, électromagnétique, ultrasons, thermique infrarouge, rayons X ou ondes TeraHz...). Cette grandeur physique, qualifiable de primaire, entre en interaction avec l'objet observé (cible), et peut être directement à l'origine du phénomène ou de l'image obtenue (absorption des rayons X dans les différentes parties du corps humain traversé, par exemple), ou donner naissance à une grandeur secondaire. Citons par exemple le cas de l'imagerie par courants de Foucault, dans laquelle l'onde électromagnétique incidente crée des nappes de courants induits dans le matériau (conducteur) : ce sont ces nappes de courants qui seront perturbées par un défaut, caractérisé dans ce cas par une variation des propriétés électriques du matériau (conductivité, perméabilité, permittivité).

L'image de ces perturbations est généralement obtenue par un ensemble de détecteurs placés en surface et qui donne dans le meilleur des cas (absence de diffraction, 'éclairage' uniforme de l'objet) une image résultant de la superposition de l'ensemble des propriétés de l'objet, dans toute son épaisseur. L'exemple le plus simple est encore celui de la radiographie à rayons X dans laquelle l'image résulte de l'ensemble des parties du corps traversé par les ondes, ce qui rend l'interprétation difficile. Pour obtenir une image en 3 dimensions, il faut 'enrichir' l'ensemble des signaux perçus : c'est le scanner à rayons X, où N images sont obtenues pour N angles d'observation différents. Ce cas est plus simple que la plupart des problèmes de contrôle non destructifs (CND) : absence de diffraction, et accès aux deux 'faces' de l'objet à imager.

En CND industriel, il y a très rarement un accès aux deux faces de l'objet ou de la structure à contrôler, et l'utilisation de ce type de techniques est alors très souvent impossible : il faut le recours à l'utilisation de capteurs à courants de Foucault, ultrasonores, infrarouges, etc... Ces capteurs donnent des images très éloignées de la forme réelle des défauts pour deux raisons majeures :

- d'une part, il y a superposition des images observées (il peut y avoir plusieurs fissures enfouies sous la surface inspectée), et
- d'autre part, l'image peut résulter de la perturbation de la grandeur secondaire.

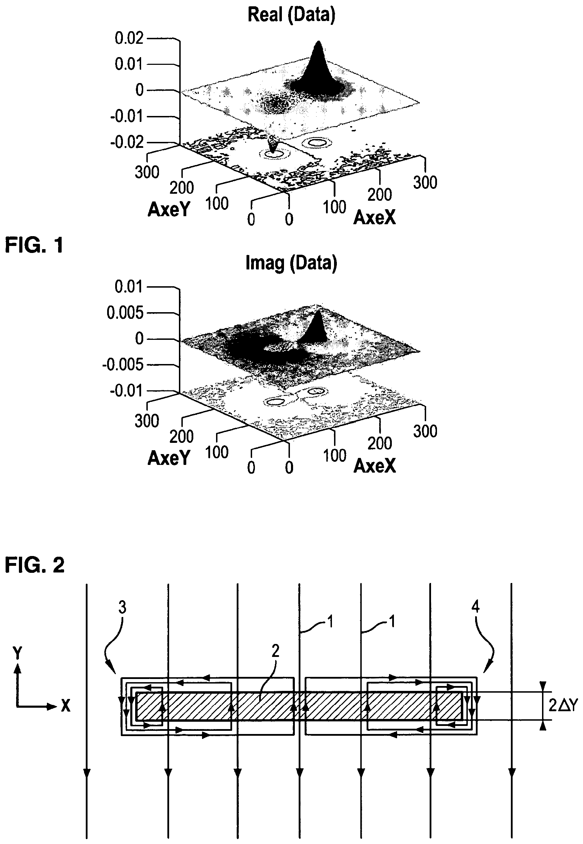

Par exemple, la figure 1 montre l'image de la partie réelle (Real) et de la partie imaginaire (imag) d'un champ magnétique en surface d'un matériau conducteur (2017A, anciennement Au4G) comportant une fissure débouchante. Cette image a été obtenue avec un imageur à courants de Foucault à détection magnéto-optique (ECI) tel que décrit dans les documents WO2005/001467 et WO 2007/135265, auxquels il est possible de se rapporter pour de plus amples informations. Les axes X et Y sont en dixième de millimètres.

Dans cet exemple, en relation avec la figure 2, il est possible de considérer que l'éclairage du champ magnétique a induit des nappes (1) de courants orientées selon l'axe Y (dans la zone inspectée), dont la présence de cette fissure débouchante (2) a modifié le trajet, créant par induction un champ (3,4) détectable en surface. Il y a plusieurs problèmes pour 'reconstruire' la géométrie réelle du défaut : les nappes de courants sont différentes en chaque plan de profondeur Z, le défaut peut donc en affecter plusieurs, et l'appareil de mesure ne donne pas toujours toutes les composantes de la grandeur physique rayonnée par le défaut vers la surface (champ magnétique ou électrique, dans le cas de l'ECI).

Un but de l'invention est de fournir un procédé d'estimation de défauts présent dans des objets (ou des structures) ne présentant pas les défauts et inconvénients précités.

A cet effet, il est prévu, selon l'invention, un procédé d'estimation quantitative de défauts tel que défini en revendication 1 annexée

Avantageusement, mais facultativement, le procédé selon l'invention présente au moins l'une des caractéristiques suivantes :

- lors de l'étape f), une sous-étape f1) de tamisage est effectuée afin de ne garder que les composantes du sous-vecteur $\vec{J}_S$ dont une phase et un module du champ ondulatoire induit à la profondeur Z, que ces composantes représentent, sont en accord avec ceux du champ ondulatoire inductif ;
- pour une profondeur Z, les étapes a) à f) sont réalisées pour au moins deux orientations d'« éclairages » de la surface extérieure de l'objet à l'aide un champ ondulatoire inductif ;
- les au moins deux estimations obtenues selon les au moins deux « éclairages » sont fusionnées à l'aide d'une analyse en composantes principales pour obtenir une estimation quantitative du défaut éventuel à la profondeur Z ;
- le procédé comporte en outre une étape de reconstruction tridimensionnelle du défaut éventuel en répétant n fois les étapes a) à f) pour n profondeurs Z distinctes ;
- lors de l'étape de reconstruction tridimensionnelle, une sous-étape préalable de tamisage progressif est effectuée pour réaliser les n estimations quantitatives ;
- pour une itération p, $1<p<=n$, au relevé du champ $\vec{H}(Z_p)$ est retranché tout ou partie $\vec{H}'_z(Z_{p-1})$ du relevé du champ $\vec{H}(Z_{p-1})$ tamisé, selon la formule $\vec{H}(Z_p) = \vec{H}^{relevé}(Z_p)-K.\vec{H}'(Z_{p-1})$, où K est un coefficient de réinjection compris entre 0 et 1 et $\vec{H}^{relevé}(Z_p)$ est le relevé de l'étape b) ;
- les composantes de $\vec{H}'_z(Z_{p-1})$ correspondent au défaut éventuel estimé lors de l'itération p-1, ou aux abords dudit défaut ; et,
- pour une profondeur Z donnée, il est associé une fréquence propre prédéterminée pour le champ ondulatoire inductif utilisé dans l'étape a).

Il est en outre prévu selon l'invention, un dispositif d'estimation quantitative de défauts éventuellement présents dans un objet comportant des moyens d'émission d'un champ ondulatoire inductif, des moyens d'enregistrement d'un relevé d'un champ ondulatoire induit sur une surface de l'objet, et des moyens de traitement destinés à mettre en oeuvre un procédé présentant au moins l'une des caractéristiques précédentes

D'autres avantages et caractéristiques de l'invention apparaitront lors de la description ci-après d'un mode de réalisation appliqué aux courants de Foucault ; Aux dessins annexés :

- la figure 1 est une image d'un champ magnétique mesuré à la surface d'un objet ;
- la figure 2 est un schéma vu de dessus de l'objet et des champs générés ayant conduit à l'image de la figure 1 ;
- la figure 3 est une vue schématique tridimensionnelle d'un objet soumis à un champ inductif électromagnétique ;
- la figure 4 est un schéma en coupe illustrant les sources ponctuelles dans un objet présentant un défaut ;
- les figures 5 à 8 illustrent des exemples obtenus à l'aide d'un procédé selon l'invention
- la figure 9 illustre un tamisage introduit dans le procédé selon l'invention ;
- les figures 10 et 11 illustrent un exemple de résultat obtenu à l'aide du tamisage de la figure 9 ;
- les figures 12 à 15 illustrent des exemples de tamisage progressif introduit dans le procédé selon l'invention ;
- les figures 16 à 23 illustrent l'application du procédé selon l'invention en utilisant des fréquences distinctes en fonction de la profondeur d'estimation ;
- la figure 24 est une vue schématique tridimensionnelle illustrant un voxel comportant un défaut ;
- la figure 25 est une vue de dessus d'un plaque épaisse massive comportant une fissure en « T » ;
- les figures 26 à 29 illustrent les résultats obtenus sur la plaque de la figure 25 en introduisant la notion de champ tournant dans le procédé selon l'invention ;
- la figure 30 illustre un exemple simplifié de tomographie utilisant le procédé selon l'invention ;
- la figure 31 illustre un exemple d'application en électrostatique de la tomographie de la figure 30 ;
- la figure 32 illustre un autre exemple d'application en courant de Foucault de la tomographie de la figure 30 ; et,
- les figures 33 à 35 illustrent une application de la tomographie à un défaut en forme de gélule à 45° dans un bloc de matériau en Aluminium

• I - PRINCIPE DE LA METHODE

Le principe du procédé selon l'invention consiste à établir des équations globales d'une interaction entre une onde et un objet pour obtenir un modèle d'une image perçue par un système d'instrumentation (ici à titre d'exemple non limitatif, un imageur à courants de Foucault à détection magnéto-optique (ECI) tel que décrit dans les documents WO2005/001467 et WO 2007/135265). Une étape d'inversion de ces équations globales permet de 'remonter' à la perturbation affectant une grandeur secondaire (dans le système ECI qui nous sert ici d'exemple, les nappes de courants d'excitation), puis aux caractéristiques du défaut lui-même, à savoir dans ce cas les variations de conductivité. Il est bien entendu que cet exemple sert de fil conducteur, mais le procédé selon l'invention reste applicable à tout système dont les équations de propagation des grandeurs sont connues, en particulier à tout système mettant en oeuvre des phénomènes ondulatoires. D'autre part, il est à noter que le terme « objet » désigne un objet seul, ou un ensemble d'objets, ou encore une ou des structures, destiné((e)s à être analysé((e)s pour estimation des défauts selon le procédé selon l'invention

Le premier problème, c'est qu'il est quasiment impossible, sauf dans les cas 'canoniques' simples, d'établir ces équations de façon analytique. La solution proposée, sur laquelle repose le procédé selon l'invention, consiste à introduire dans la problématique régissant l'interaction des différents milieux de l'objet considéré la notion de matrice de couplage. Ce concept est directement issu de l'application de la méthode dite 'DPSM' (pour « Distributed Points Sources Method », en terminologie anglosaxonne, qui se traduit par « Méthode distribuée de sources ponctuelles »), qui est décrite plus en détail dans les documents WO2004/044790 et WO2007/071735, auxquels il est possible de référer pour plus d'informations.

L'idée de la méthode DPSM consiste à mailler les objets ou les interfaces de l'objet et d'associer à chacune des mailles élémentaires un point test situé au barycentre de la maille, et des points sources (dites sources ponctuelles) situés de part et d'autre du point test. De ce fait, le problème initial, complexe et continu, laisse place à un ensemble d'équations analytiques permettant d'obtenir les grandeurs physiques dans tous les milieux, par simple superposition des contributions de chaque source rayonnant dans le milieu considéré. La valeur même des sources est obtenue par résolution d'un ensemble de N équations à N inconnues (les sources ponctuelles), ces équations étant écrites pour vérifier les conditions aux limites sur les points test issus du maillage.

• II- MISE EN EQUATION - CAS ELECTROMAGNETIQUE ET DES COURANTS DE FOUCAULT

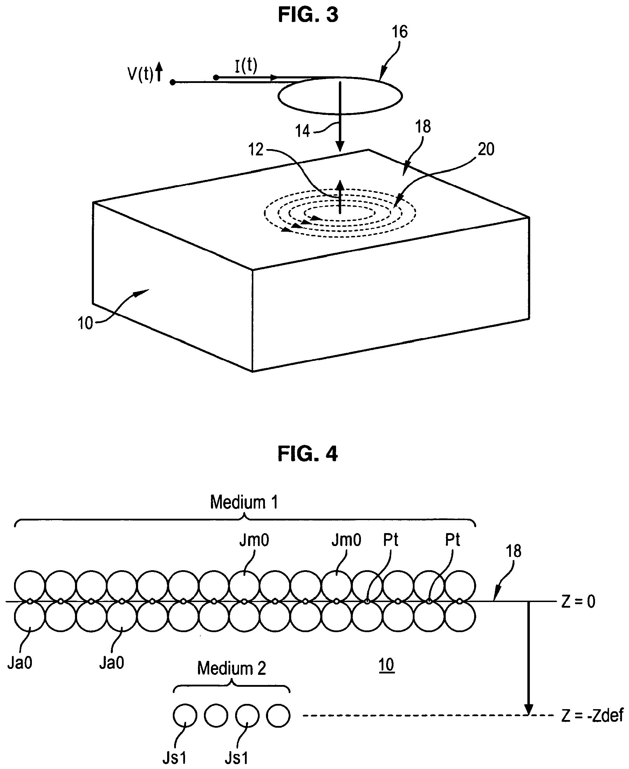

En référence aux figures 3 et 4, nous allons expliciter la mise en équation servant de base au procédé selon l'invention. En figure 3, est représenté un objet 10 qui est, dans l'exemple qui nous occupe, électriquement conducteur et assimilé comme semi infini. Une boucle de courant 16 est positionnée à distance et en regard d'une surface supérieure 18 de l'objet 10. Cette boucle de courant 16 est alimentée par un courant électrique alternatif de voltage V(t) et d'intensité I(t), t étant le temps. La boucle de courant 16 génère alors vers l'objet 10 un champ magnétique inductif 14. En réponse, l'objet 10 émet un champ magnétique induit 12 et, au niveau de sa surface supérieure 18, une nappe 20 de courants de Foucault. En figure 4, la vue schématique en coupe du problème de la figure 3 est représentée : le plan Z=0 correspond à la surface supérieure 18 de l'objet 10 testé, un dispositif d'excitation en champ alternatif (ici la boucle de courant 16), situé dans le milieu ou médium 1 (ici l'air) 'éclaire' l'objet 10, constitué ici du milieu ou médium 2, et crée à l'intérieur des nappes de courants qui décroissent et se déphasent avec la profondeur Z. Un défaut éventuellement présent dans l'objet 10 est situé, ici, à une profondeur Z=-Zdef au sein du milieu 2. Comme cela est expliqué dans les documents WO2004/044790 et WO2007/071735, la méthode DPSM permet de calculer les grandeurs associées aux différentes sources ponctuelles Jm0, Ja0 et Js1, où :

- Jm0 sont les sources ponctuelles au niveau de l'interface (que représente la surface 18) modélisant la transmission des grandeurs liées au dispositif d'excitation du milieu 1 vers le milieu 2,
- Ja0 sont les sources ponctuelles au niveau de l'interface (que représente la surface 18) modélisant la transmission des grandeurs du milieu 2 vers le milieu 1,
- Js1 sont les sources ponctuelles associées au défaut éventuellement présent dans l'objet 10 modélisant une perturbation des grandeurs dans le milieu 2.

Rappelons que le défaut éventuellement présent dans l'objet est caractérisé par une variation locale des propriétés électriques (ici la conductivité) et plus généralement des grandeurs associées aux sources ponctuelles.

A l'aide de la méthode DPSM appliqué à la situation illustrée aux fiigures 3 et 4, nous pouvons établir que le champ électrique $\vec{E}_1$ dans l'objet 10, à une profondeur Z1 donnée, s'écrit :

$$\vec{E}_1 = Q_{1B}.\vec{I}_B = Q_{10}.\vec{J}_{M0} \qquad (1)$$

Où $Q_{1B}$ est une matrice de couplage entre la nappe de courants $\vec{I}_B$ du dispositif d'excitation au niveau de la boucle de courant 16 et les points situés sur le plan d'observation à profondeur Z1, et $Q_{10}$ est une matrice de couplage entre la nappe de courants $\vec{J}_{M0}$ du dispositif d'excitation situé à Z=0 (nappe associée aux sources ponctuelles Jm0) et les points situés sur le plan d'observation à profondeur Z1.

De là, nous en déduisons une valeur de la densité des courants en chacun de ces points situés sur le plan, en multipliant le champ par la conductivité $\sigma_1$ en chaque point de ce plan d'observation à profondeur Z1 ($\sigma_1$ est une matrice diagonale), et en supposant que le champ électrique soit peu affecté par la présence du défaut éventuellement présent dans l'objet. La conductivité de l'objet sans défaut est $\sigma_0$ :

$$\vec{J}_1 = \sigma_1.\vec{E}_1 = (\sigma_0 - \Delta\sigma_1).\vec{E}_1 \qquad (2)$$

Les courants de perturbation vont être définis à partir de la perturbation de la conductivité $\Delta\sigma_1$ autour de $\sigma_0$, qui est vue comme la superposition d'une densité de courants de perturbation $\vec{J}_{S1}$ avec une densité de courant initial sans perturbation :

$$\vec{J}_{S1} = -\Delta\sigma_1 . \vec{E}_1 \qquad (3)$$

Donc, si nous arrivons à trouver le vecteur densité de courants de perturbation $\vec{J}_{S1}$ correspondant alors au défaut éventuellement présent dans l'objet et observé au niveau de la surface 18, nous aurons bien une carte de la variation de conductivité sur ce plan à profondeur Z1. La densité de courants $\vec{J}_{S1}$ correspond aux courants de perturbation, correspondant dans le cas d'espèce au champ 3 et 4 de la figure 2.

Nous allons maintenant définir une liste de points tests Pt situés à la surface 18 de l'objet 10 (aux points de contact des sphères contenant les sources ponctuelles Jm0 et Ja0), et mesurer le champ magnétique en ces points Pt. Jm0 sont les sources ponctuelles qui rayonnement depuis la surface 18 (à Z=0) dans le milieu 2 de l'objet. Ja0 sont les sources ponctuelles qui rayonnent depuis la surface 18 vers le milieu 1 situé au dessus (ici, de l'air). Les équations de continuité de chaque côté 1 et 2 de l'interface que représente la surface 18 s'écrivent :

$$\begin{cases} \vec{A_1} = \vec{A_2} \\ \dfrac{1}{\mu_1} \cdot \dfrac{\partial \vec{A_1}}{\partial \vec{n}} = \dfrac{1}{\mu_2} \cdot \dfrac{\partial \vec{A_2}}{\partial \vec{n}} \end{cases} \qquad (4)$$

Où $\vec{A_1}$ et $\vec{A_2}$ sont des potentiel vecteurs aux points Pt, respectivement dans le milieu 1 et dans le milieu 2, et $\mu 1$ et $\mu 2$, la perméabilité respective des milieux 1 et 2

*Nous rappelons que pour le potentiel vecteur $\vec{A}$, dans un repère orthonormé:*

$$\vec{A}x = \frac{\mu}{4\pi} \begin{bmatrix} \dfrac{e^{-jkR_{11}}}{R_{11}} & \cdots & \cdots & \dfrac{e^{-jkR_{1Ns}}}{R_{1Ns}} \\ \vdots & & & \vdots \\ \vdots & & & \vdots \\ \dfrac{e^{-jkR_{Np1}}}{R_{Np1}} & \cdots & \cdots & \dfrac{e^{-jkR_{NpNs}}}{R_{NpNs}} \end{bmatrix} \cdot \vec{J}x \iff \vec{A}x = [Wxx] \cdot \vec{J}x \qquad (5)$$

*Où k est le nombre d'onde et $R_{NpNs}$ représente la distance entre une source Ns et un point d'observation Np.*
donc

$$\vec{A} = \begin{vmatrix} \vec{A}x \\ \vec{A}y \\ \vec{A}z \end{vmatrix} = \begin{bmatrix} Wxx & 0 & 0 \\ 0 & Wyy & 0 \\ 0 & 0 & Wzz \end{bmatrix} \cdot \begin{bmatrix} \vec{Jx} \\ \vec{Jy} \\ \vec{Jz} \end{bmatrix} = W \cdot \vec{J} \qquad (6)$$

*Pour la dérivée selon la normale à l'interface, en un point, nous obtenons:*

$$\frac{\partial \vec{A}(\vec{r})}{\partial \vec{n}} = \begin{bmatrix} \dfrac{\partial Ax}{\partial x} & \dfrac{\partial Ax}{\partial y} & \dfrac{\partial Ax}{\partial z} \\ \dfrac{\partial Ay}{\partial x} & \dfrac{\partial Ay}{\partial y} & \dfrac{\partial Ay}{\partial z} \\ \dfrac{\partial Az}{\partial x} & \dfrac{\partial Az}{\partial y} & \dfrac{\partial Az}{\partial z} \end{bmatrix} \cdot \begin{bmatrix} n_x \\ n_y \\ n_z \end{bmatrix} \qquad (7)$$

*Comme la normale est selon l'axe des Z dans cet exemple:*

$$\frac{\partial \vec{A}(\vec{r})}{\partial z} = \begin{vmatrix} \dfrac{\partial Ax}{\partial x} & \dfrac{\partial Ax}{\partial y} & \dfrac{\partial Ax}{\partial z} \\[2mm] \dfrac{\partial Ay}{\partial x} & \dfrac{\partial Ay}{\partial y} & \dfrac{\partial Ay}{\partial z} \\[2mm] \dfrac{\partial Az}{\partial x} & \dfrac{\partial Az}{\partial y} & \dfrac{\partial Az}{\partial z} \end{vmatrix} \cdot \begin{bmatrix} 0 \\ 0 \\ 1 \end{bmatrix} = \begin{bmatrix} \dfrac{\partial Ax}{\partial z} \\[2mm] \dfrac{\partial Ay}{\partial z} \\[2mm] \dfrac{\partial Az}{\partial z} \end{bmatrix} = \sum_i \begin{vmatrix} \dfrac{\alpha_i . \mu}{4\pi}.[(z - Cz_i).Jx_i] \\[2mm] \dfrac{\alpha_i . \mu}{4\pi}.[(z - Cz_i).Jy_i] \\[2mm] \dfrac{\alpha_i . \mu}{4\pi}.[(z - Cz_i).Jz_i] \end{vmatrix} \quad (8)$$

**Où $Cz_i$ est la coordonnée selon OZ du point source i.**

*En appelant* $\dfrac{\partial \vec{A}(\vec{r})}{\partial \vec{n}} = \overrightarrow{dnA}(\vec{r})$ *et avec* $\alpha_i = -\dfrac{e^{-jk.Ri}}{R_i^2}\left[ j.k + \dfrac{1}{R_i} \right],$ *nous obtenons en écriture matricielle:*

$$\overrightarrow{dnA} = \begin{vmatrix} dn\vec{A}x \\ dn\vec{A}y \\ dn\vec{A}z \end{vmatrix} = \begin{bmatrix} Yzx & 0 & 0 \\ 0 & Yzy & 0 \\ 0 & 0 & Yzz \end{bmatrix} \cdot \begin{bmatrix} J\vec{x} \\ J\vec{y} \\ J\vec{z} \end{bmatrix} = Y \cdot \vec{J} \quad (9)$$

*De là, le champ électrique $\vec{E}$ peut s'écrire :*

$$\vec{E} = -\frac{\partial \vec{A}}{\partial t} = -j\omega\vec{A} \quad (10)$$

*Et le champ magnétique $\vec{B}$, en un point :*

$$\vec{B}(\vec{r}) = \sum_i \begin{vmatrix} \dfrac{\alpha_i . \mu}{4\pi}.[-(z - Cz_i).Jy_i + (y - Cy_i).Jz_i] \\[2mm] \dfrac{\alpha_i . \mu}{4\pi}.[-(x - Cx_i).Jz_i + (z - Cz_i).Jx_i] \\[2mm] \dfrac{\alpha_i . \mu}{4\pi}.[-(y - Cy_i).Jx_i + (x - Cx_i).Jy_i] \end{vmatrix} \quad (11)$$

*Soit, en écriture matricielle :*

$$\vec{B} = \begin{vmatrix} \vec{B}x \\ \vec{B}y \\ \vec{B}z \end{vmatrix} = \begin{bmatrix} 0 & -Bzy & Byz \\ Bzx & 0 & -Bxz \\ -Byx & Bxy & 0 \end{bmatrix} \cdot \begin{bmatrix} J\vec{x} \\ J\vec{y} \\ J\vec{z} \end{bmatrix} = X \cdot \vec{J} \quad (12)$$

*Les structures de ces matrices renseignent sur la grandeur à mesurer : par exemple, si l'orientation la nappe de courants d'excitation est selon l'axe Y, donc que Jx et Jz sont nuls, il ne sera possible de ne mesurer que Bx et Bz, ou uniquement le champ électrique Ey. Ceci est très important car cela permet de comprendre et d'optimiser la structure de l'instrumentation.*

Des équations de continuité (4), nous élaborons le système matriciel suivant :

$$\vec{C}_{OI} = \begin{bmatrix} \vec{H}_0 \\ \vec{0} \\ \vec{0} \end{bmatrix} = \begin{bmatrix} 0 & 0 & M_{0A0} \\ W_{0S1} & +W_{0M0} & -W_{0A0} \\ 1/\mu_1 * Y_{0S1} & +1/\mu_1 * Y_{0M0} & -1/\mu_2 * Y_{0A0} \end{bmatrix} * \begin{bmatrix} \vec{J}_{S1} \\ \vec{J}_{M0} \\ \vec{J}_{A0} \end{bmatrix} = T_1.\vec{J}_1 \qquad (13)$$

Dans lequel, les matrices W calculent le potentiel vecteur A aux points test Pt situés en surface 18, à Z=0. Les matrices Y calculent la dérivée selon la normale à la surface 18 du potentiel vecteur aux mêmes points, et la matrice M calcule les composantes du champ H en ces points. De là, par inversion de cette relation, nous pouvons trouver la liste complète des sources ponctuelles J (Jm0, Ja0 et Js1) car H est connu par la mesure sur la surface 18 de l'objet 10. Le champ H mesuré en surface est soit le champ magnétique B, soit le champ électrique E. La matrice de couplage T est élaborée à partir des matrices M, W et Y. C'est une matrice inversible.

En résolvant analytiquement le système matriciel (13), tout calcul fait, cela donne :

$$\vec{H}_0 = M_{0A0}.\left(W_{0M0}^{-1} * W_{0A0} - Y_{0M0}^{-1} * Y_{0A0}\right)^{-1} * \left(W_{0M0}^{-1} * W_{0S1} - Y_{0M0}^{-1} * Y_{0S1}\right) * \vec{J}_{S1} = M_{0S1eq} * \vec{J}_{S1} \quad (13')$$

En pratique et de manière générale, le procédé d'estimation quantitative de défauts présents dans un objet comporte les étapes suivantes :

a) « éclairage » d'une surface de l'objet à l'aide un champ ondulatoire inductif, notamment un champ électromagnétique ou ultrasonore, etc...

b) relevé, au niveau de la surface de l'objet, d'un champ ondulatoire induit $\vec{C}_{oi}$ à l'aide d'un dispositif de mesure. La résolution du dispositif de mesure nous indique le maillage maximal pouvant être considéré pour la méthode DPSM qui permet d'élaborer le système matriciel (13)

c) élaboration d'une matrice de couplage $T_1$ à partir des propriétés du matériau de l'objet

d) résolution du système matriciel (13) afin de déterminer le vecteur $\vec{J}_1$ à la profondeur Z1

e) extraction du sous-vecteur $\vec{J}_{S1}$ correspondant à un éventuel défaut présent dans l'objet à la profondeur Z1.

f) Estimation quantitative du défaut éventuel à partir du sous-vecteur $\vec{J}_{S1}$ à la profondeur Z1.

Afin d'estimer en trois dimensions le défaut éventuel, il suffit de répéter les étapes précédentes pour différentes profondeurs Z.

Nous allons illustrer dans ce qui suit le procédé selon l'invention par un exemple.

• III - EXEMPLE D'APPLICATION : COURANTS EQUIVALENTS AUX FISSURES

Dans cet exemple du procédé selon l'invention, nous allons illustrer une application de ce procédé selon l'invention dans le cadre d'un champ magnétique inductif et des courants de Foucault. Pour cela, nous allons estimer avec le procédé selon l'invention, à des profondeurs Z différentes de l'objet, les nappes de courants Js qui synthétisent le champ mesuré au niveau du défaut éventuellement présent dans ledit objet.

Pour plus de simplicité dans la description, et pour en montrer la robustesse du procédé selon l'invention, nous allons négliger le rôle de l'interface. Pour cela, nous avons vu que l'équation (13') permet de calculer le champ $\vec{H}_{0+}$ à Z=0+ (dans le milieu 1, juste au-dessus de la surface 18). Il existe une autre équation qui permette le calcul direct du champ $\vec{H}_{0-}$ à Z=0- (dans le milieu 2, juste ne dessous de la surface 18) : dans le cas où seule la composante normale du champ ondulatoire induit, qui est continue à la traversée de l'interface, est mesurée, et que les matériaux en présence sont amagnétiques, nous pouvons assimiler $\vec{H}_{0+} = \vec{H}_{0-}$ et écrire directement que :

$$\vec{H}_0 = M_{0S1}.\vec{J}_{S1} \qquad (14)$$

Cette équation sera par la suite appelée équation d'observation.

La densité de courants de perturbation, $\vec{J}_{S1} = -\Delta\sigma_1.\vec{E}_1$, qui en résulte et qui apparaît dans le modèle issu de la méthode DPSM, est multiplié par la surface frontale du défaut : $\Delta S = \Delta X.\Delta Z$ et par $\Delta Y$ qui est le pas de maillage (rappelons que les courants Js sont homogènes à des Ampères.mètres). Nous avons donc la hauteur $\Delta Z$ du défaut en chaque maille de pas $\Delta X \Delta Y$ :

$$\vec{J}_{S1} DPSM = \Delta S.\Delta Y.(-\Delta \sigma_1.\vec{E}_1) \tag{15}$$

Le terme $\Delta S.\Delta Y$ représente le volume du voxel élémentaire. Dans la suite de l'exposé, nous confondrons $\vec{J}_{S1} DPSM$ avec $\vec{J}_{S1}$ pour plus de simplicité dans l'écriture.

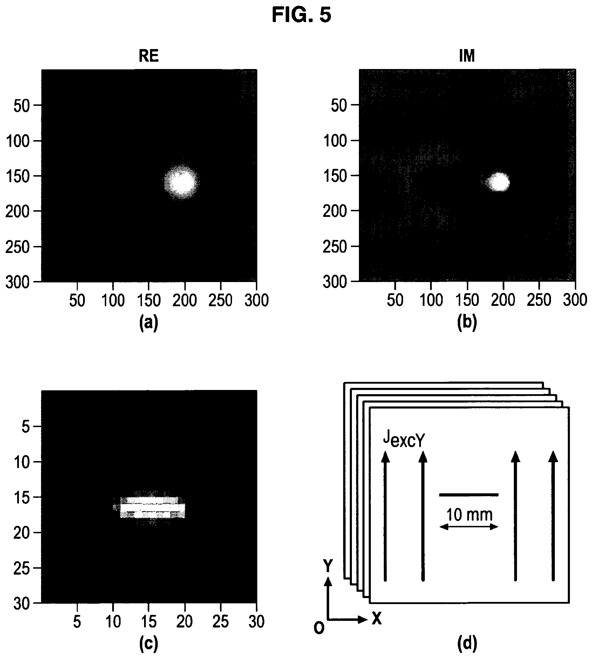

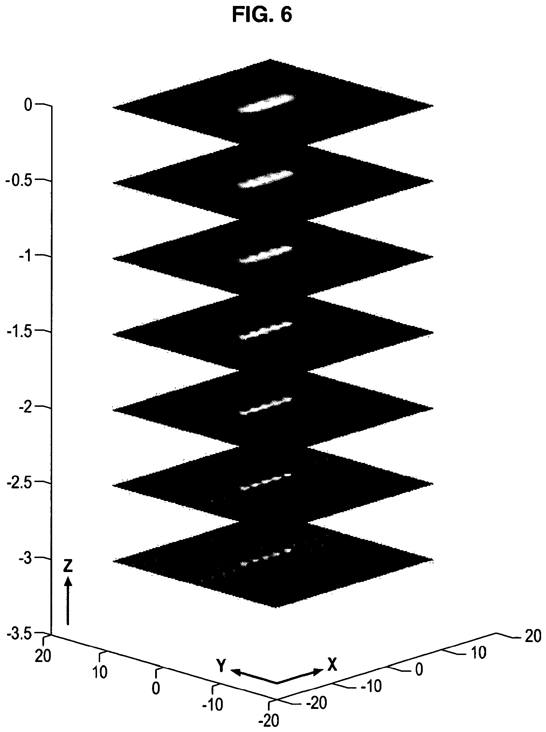

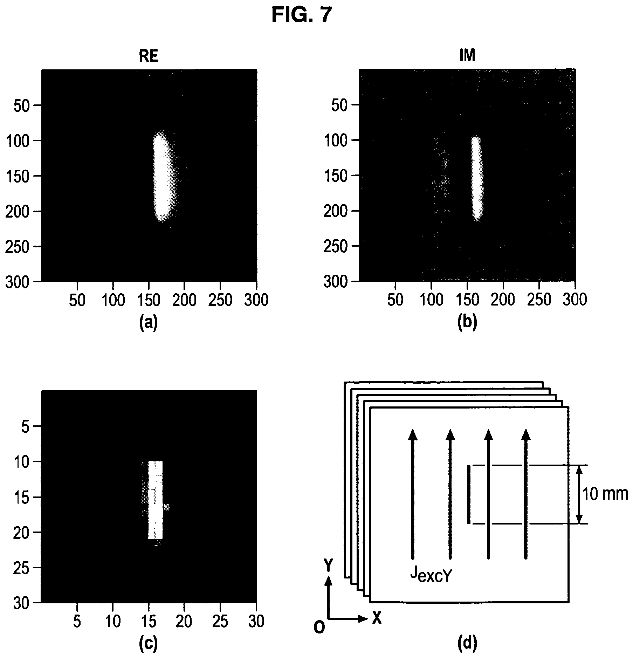

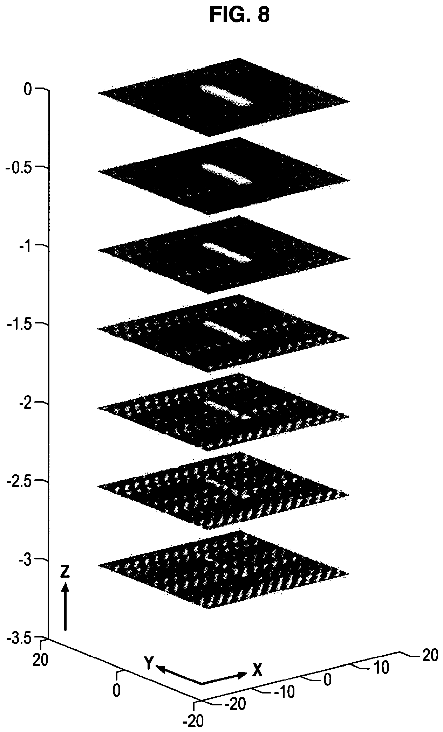

Les figures 5 à 8 illustrent quelques résultats obtenus sur une fissure débouchante de 10mm de large (perpendiculaire (figures 5 et 6) et parallèle (figures 7 et 8) à la nappe de courants d'excitation) dans un objet 10, avec un appareil (imageur ECI) qui ne mesure que la composante Hz du champ induit en surface, et une nappe d'excitation issue du champ inductif orientée selon l'axe OY.

La figure 5 illustre le champ Hz [(a) : partie réelle, (b) partie imaginaire] mesuré par l'imageur ECI pour une excitation de 1600 Hz, pour un défaut de type fissure débouchante orientée selon Ox (Longueur, ouverture, profondeur de la fissure = 10 X 0,1 X 1,2 mm) dans un empilage de tôles 2017A (anciennement AU4G) sur une surface de 30X30mm formant l'objet 10 (d), et estimation par le procédé selon l'invention de la nappe DPSM équivalente à une profondeur Z=0,5 mm (c). Il est à noter que les images de champ ont, ici, une résolution spatiale de 0,1 X 0,1 mm, les images des nappes DPSM ont une résolution de 1 X 1mm (dimensionnement du maillage), pour de raisons pratiques de mise en oeuvre. Il est possible d'avoir un maillage dont le dimensionnement correspond à la résolution des images de champ effectivement relevées par l'imageur ECI. Dans le cas illustré, cette résolution a été abaissée en regroupant des ensembles de 10 pixels par 10 pixels des images de champ dont les valeurs ont été moyennées avant de résoudre le système matriciel (14).

La figure 6 illustre le résultat du procédé selon l'invention pour l'estimation des nappes de courants DPSM, entre 0 et 3.5 mm de profondeur, pour le défaut (orienté selon Ox) de la figure 5

La figure 7 illustre le champ Hz [(a) : partie réelle, (b) : partie imaginaire] mesuré par l'imageur ECI pour une excitation de 1600 Hz, pour un défaut de type fissure débouchante orientée selon Oy (Longueur, ouverture, profondeur de la fissure = 10 X 0,1 X 1,2 mm) dans un empilage de tôles 2017A (anciennement AU4G) sur une surface de 30X30mm formant l'objet 10 (d), et estimation par le procédé selon l'invention de la nappe DPSM équivalente à une profondeur Z=0,5 mm (c). Comme précédemment, il est à noter que les images de champ ont, ici, une résolution spatiale de 0,1 X 0,1 mm, les images des nappes DPSM ont une résolution de 1 X 1mm (dimensionnement du maillage), pour de raisons pratiques de mise en oeuvre. Il est possible d'avoir un maillage dont le dimensionnement correspond à la résolution des images de champ effectivement relevées par l'imageur ECI. Dans le cas illustré, cette résolution a été abaissée en regroupant des ensembles de 10 pixels par 10 pixels des images de champ dont les valeurs ont été moyennées avant de résoudre le système matriciel (14).

La figure 8 illustre le résultat du procédé selon l'invention pour l'estimation des nappes de courants DPSM, entre 0 et 3.5 mm de profondeur, pour le défaut (orienté selon Oy) de la figure 7.

• IV- PREMIERE EVOLUTION : TRI DES COURANTS PAR NAPPE EN PROFONDEUR

Dans le chapitre précédent, ont été validés les concepts de courants de perturbation, puisque nous constatons que l'inversion de la matrice DPSM de couplage F nous donne bien une nappe de courant concentrée Js dans le défaut, et de sens inverse à celui de l'excitation (voir les figures 5, 6, 7 et 8).

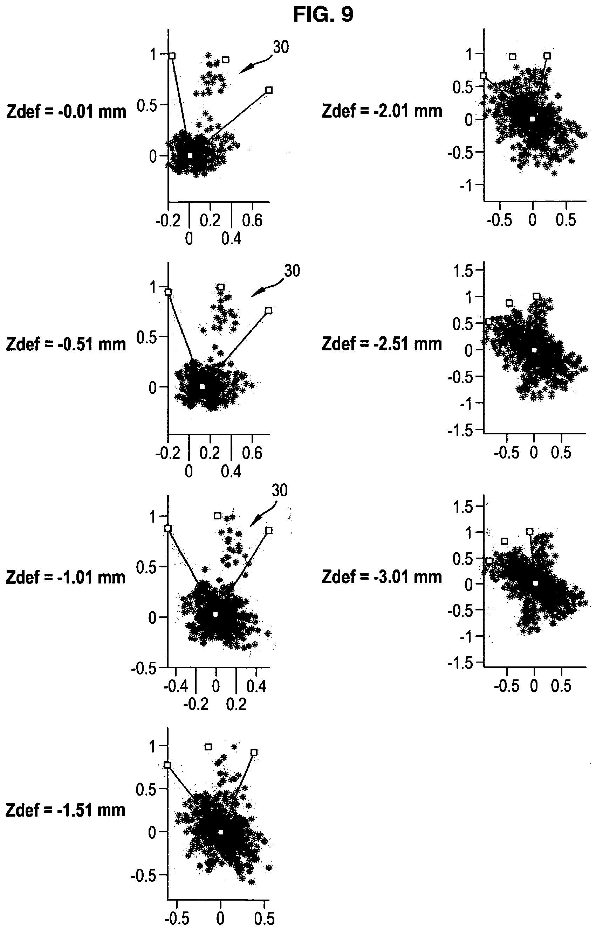

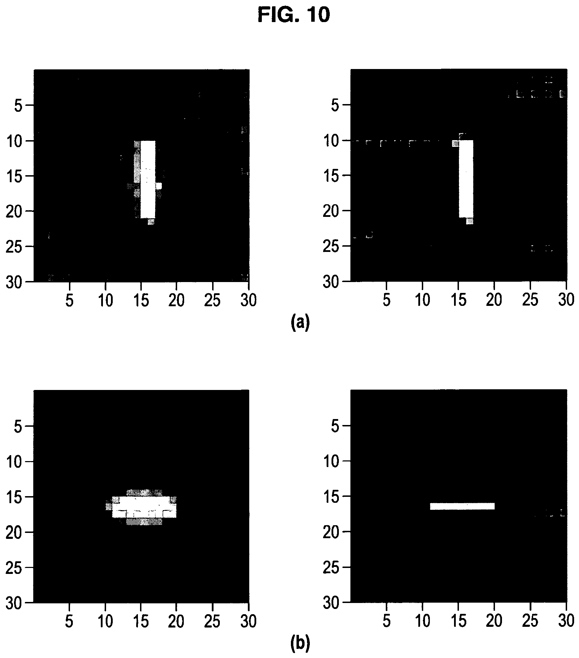

Toutefois, la précision n'est pas suffisante pour caractérisé le défaut. Comme il faut à chaque fois inverser la matrice équivalente $M_{0S1eq}$ de l'équation (13') pour obtenir l'éventuel défaut à la profondeur Z1, et que la mesure du champ ondulatoire induit au niveau de la surface 18 génère du bruit, il est souhaitable de régulariser la matrice équivalente lors de son inversion. Pour cela, nous allons prendre en compte des informations *a priori* sur les courants d'éxcitation. En effet, les exemples des figures 6 et 8 montrent que sur les nappes de courants DPSM estimées pour des profondeurs au-delà de Z=-1.5mm, le défaut est toujours présent alors que ce dernier fait en fait 1.2mm de profondeur. L'idée est maintenant de regarder les nappes de courants DPSM à différentes profondeurs et de ne garder que les courants estimés dont la phase et le module sont en accord avec ceux des courants d'excitation à profondeur donnée. Nous appelons cette opération le « tamisage ». La figure 9 illustre un exemple pris sur la fissure débouchante orientée selon Oy de la figure 7. Cette figure 9 représente des nuages de points dans le plan complexe, pour chacune des nappes de courants DPSM estimées, en fonction de la profondeur. Les points dans le secteur angulaire 30 correspondent aux points sélectionnés par tamisage en amplitude et en phase. La figure 10 illustre l'application de ce tamisage pour une nappe de courants DPSM estimées à la profondeur 0,5 mm avant (à gauche) et après tamisage (à droite), pour les défauts selon Ox (a) et selon Oy (b).

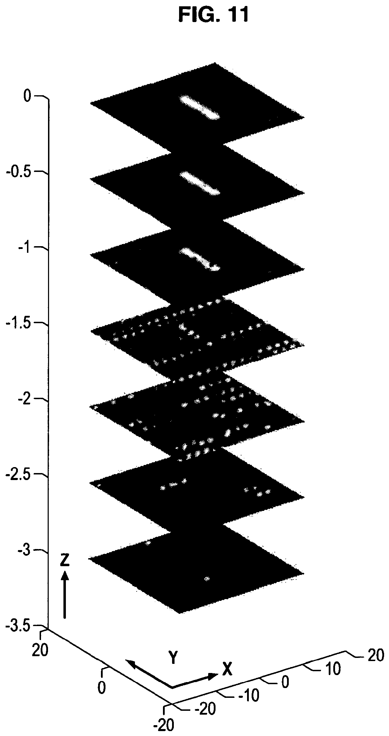

La figure 11 illustre un exemple de tamisage inclut dans le procédé selon l'invention qui permet l'estimation des nappes de courants DPSM, entre 0 et 3,5 mm de profondeur, pour le défaut (orienté selon Oy) de la figure 7, après opération de tamisage en module et en phase, en fonction de leur concordance avec les nappes d'excitation du champ inductif appliqué. La profondeur réelle du défaut est 1.2mm.

## • V- DEUXIEME EVOLUTION : TAMISAGE PROGRESSIF (ITERATIF)

Le tamisage progressif consiste à estimer les sources de courant DSPM de la couche p à une profondeur Zp donnée, en prenant en compte les nappes de courants estimées dans la couche précédente p-1 à une profondeur Zp-1. Pour mettre en oeuvre cette approche itérative, le procédé selon l'invention retranche à chaque itération p tout ou partie de la cartographie relevée du champ $\vec{H'}_z(Z_{p-1})$ qui serait due uniquement aux sources estimées et tamisées dans la couche précédente p-1, de la cartographie relevée du champ $\vec{H}_z^{mesuré}(Z_p)$ considérée. Les sources de courants en couche de profondeur Zp sont donc estimées à l'itération p à partir de la cartographie de champ :

$$\vec{H}_z(Z_p) = \vec{H}_z^{mesuré}(Z_p) - K.\vec{H}'_z(Z_{p-1}) \tag{16}$$

dans laquelle K est un coefficient de « réinjection » qui peut varier de 0 (pas de tamisage progressif) à 1 (tamisage progressif complet).

Première hypothèse - « l'emporte pièce » : les sources de courants DSPM correspondant au défaut sont des sources virtuelles qui viendraient annuler, dans le défaut, les courants de Foucault induit dans le matériau. Ces sources sont alors considérées comme rayonnantes dans le matériau de l'objet. De ce fait, $\vec{H'}_z(Z_{p-1})$ comprend alors ces sources de la couche p-1 et sera retranché de la cartographie relevé $\vec{H}_z^{mesuré}(Z_p)$ de la couche p.

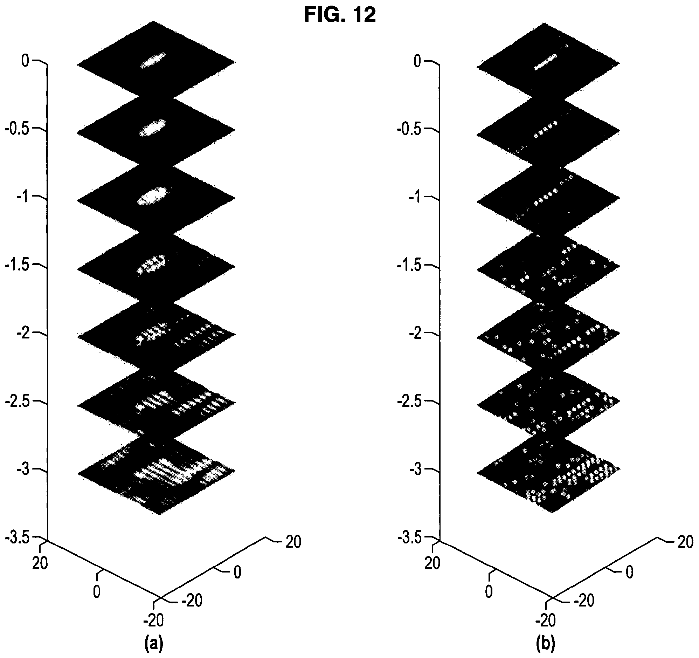

La figure 12 illustre une reconstruction par le procédé selon l'invention des nappes de courant DPSM, par tamisage progressif avec K=0,3, à gauche (a) avant tamisage, à droite (b) après tamisage. Le défaut a une profondeur réelle de 1,2mm. Il est orienté selon Ox et la nappe de courant d'excitation est selon Oy (figure 5).

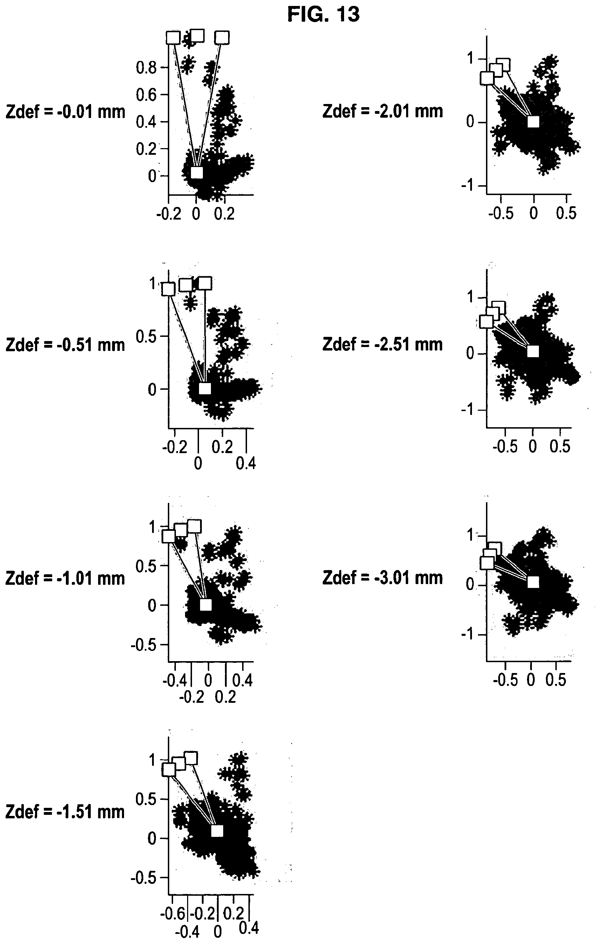

La figure 13, quant à elle, montre le tamisage utilisé (le secteur angulaire de tamisage correspond au déphasage dphi de l'onde d'excitation dans la profondeur dZ considérée (ici dZ=0,5mm à 1600Hz, et dphi = 10°).

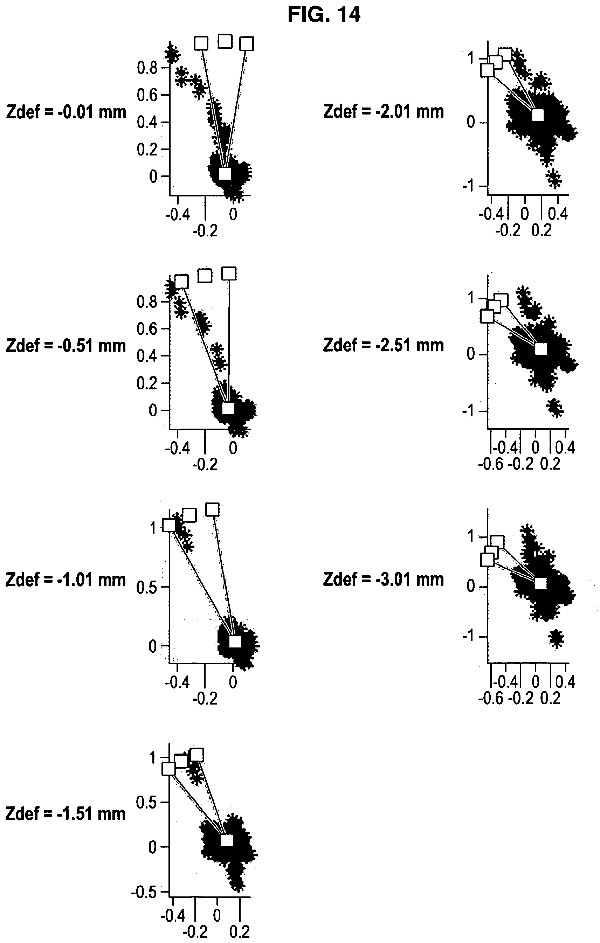

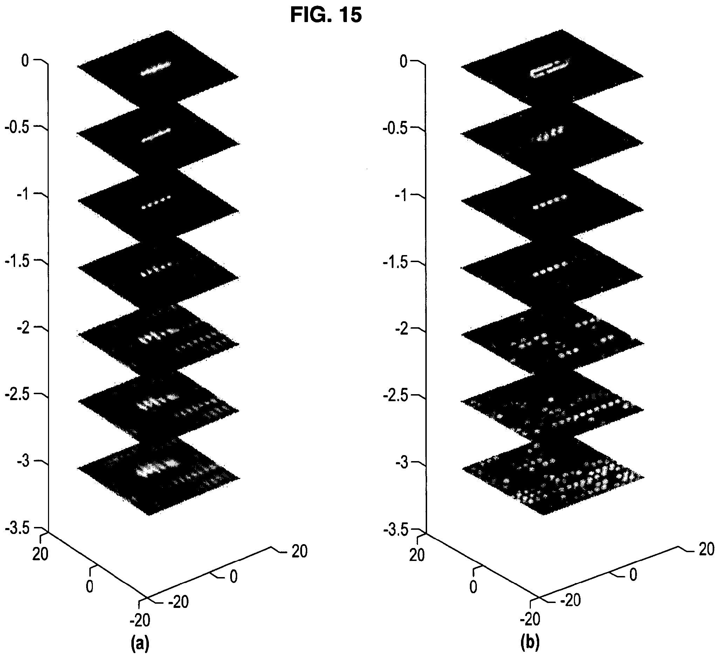

Seconde hypothèse : nous considérons maintenant une nouvelle hypothèse de travail : les sources DSPM correspondent aux courants, toujours orientés selon l'axe Oy, qui apparaissent aux « abords » du défaut, c'est à dire autour des parois et sous le défaut. Ces sources sont sélectionnées pour former $\vec{H'}_z(Z_{p-1})$. Ces courants correspondent aux courants d'excitation qui sont déviés autour et sous le défaut. Selon cette hypothèse, le champ magnétique de réaction dû à la circulation de ces courants « de défaut » se propage dans l'air (c'est-à-dire dans le volume d'air du défaut). Nous prenons donc en compte cette nouvelle hypothèse dans le tamisage progressif pour estimer avec le procédé selon l'invention, à chaque itération les contributions du champ magnétique de réaction dues aux sources de courants aux abords du défaut. Nous obtenons alors les résultats de la figure 15(reconstruction des nappes de courant DPSM « aux abords » du défaut, par tamisage progressif avec K=0,3, à gauche (a) avant tamisage, à droite (b) après tamisage. Profondeur réelle du défaut : 1,2mm, défaut orienté selon Ox et nappe de courant d'excitation selon Oy), avec le tamisage de la figure 14 (tamisage utilisé (le secteur angulaire de tamisage correspond au déphasage dphi de l'onde d'excitation dans la profondeur dZ considérée (ici dZ=0,5mm à 1600Hz, et dphi = 10°).

Il est à noter, après tamisage, la présence des courants Jy « autour » du défaut en surface, et des courants circulant « sous » le défaut en couche Z=1,5mm.

## • VI- TROISIEME EVOLUTION : FORMULATION GLOBALE MULTIFREQUENCES

Toujours pour améliorer la précision de l'estimation du défaut présent dans l'objet, l'idée maintenant est de trouver une formulation globale pour tenir compte d'un « enrichissement » du signal disponible en disposant d'une palette de fréquences d'excitation.

Pour cela, nous allons écrire l'équation d'observation à différentes fréquences et en considérant simultanément la contribution de plusieurs couches de nappes de courants DPSM à des profondeurs différentes.

A une profondeur $Z_1$ et pour une fréquence d'excitation $F_1$, l'équation d'excitation s'écrit, pour un courant d'excitation $I_0$ de fréquence $F_1$ situé en surface, l'équation :

$$\vec{E}_1 = Q_{10}.\vec{J}_{M0} \text{ est réécrite } \vec{E}_1^{F1} = Q_{10}^{F1}.\vec{J}_{M0}^{F1} \tag{17}$$

Il en résulte une densité de courants de perturbation :

$$\vec{J}^{F1}{}_{S1} = \Delta S.\Delta Y.(-\Delta \sigma_1.\vec{E}^{F1}{}_1) \tag{18}$$

Le champ H mesuré s'exprime par l'équation d'observation, en Z=0, vue précédemment :

$$\vec{H}^{F1}{}_0 = M^{F1}{}_{0S1}.\vec{J}^{F1}{}_{S1} = M^{F1}{}_{0S1}.\Delta \sigma_1.Q^{F1}{}_{10}.\vec{J}^{F1}{}_{M0} \tag{19}$$

Equation qui s'écrit plus simplement sous la forme, pour la couche de profondeur $Z_1$ et la fréquence $F_1$:

$$\vec{H}_{F1} = M_{11}.\vec{J}_{S11} = M_{11}.\Delta \sigma_1.Q_{11}.\vec{J}_{M01} \tag{20}$$

Il est visible que si $\vec{J}_{S11}$ dépend de la fréquence, $\Delta \sigma_1$ n'en dépend pas, et comme $\Delta \sigma_1$ est une matrice diagonale et $Q_{11}.\vec{J}_{M01}$ un vecteur colonne, l'équation (2) s'écrit :

$$\vec{H}_{F1} = M_{11}.\vec{J}_{S11} = M_{11}.diag(.Q_{11}.\vec{J}_{M01}).\Delta \sigma_1 \tag{21}$$

Il en est déduit, pour trois fréquences par exemple et à partir de la relation (15) précédente, l'écriture matricielle suivante :

$$\begin{bmatrix} \vec{H}_{F1} \\ \vec{H}_{F2} \\ \vec{H}_{F3} \end{bmatrix} = \Delta V. \begin{bmatrix} M_{11}.diag(Q_{11}.\vec{J}_{M01}) & M_{12}.diag(Q_{21}.\vec{J}_{M01}) & M_{13}.diag(Q_{31}.\vec{J}_{M01}) \\ M_{21}.diag(Q_{12}.\vec{J}_{M02}) & M_{22}.diag(Q_{22}.\vec{J}_{M02}) & M_{23}.diag(Q_{32}.\vec{J}_{M02}) \\ M_{31}.diag(Q_{13}.\vec{J}_{M03}) & M_{32}.diag(Q_{23}.\vec{J}_{M03}) & M_{33}.diag(Q_{33}.\vec{J}_{M03}) \end{bmatrix} * \begin{bmatrix} \vec{\sigma}_1 \\ \vec{\sigma}_2 \\ \vec{\sigma}_3 \end{bmatrix} \tag{22}$$

Où $\Delta V$ est le voxel considéré dans l'objet analysé.

<u>Observation :</u> Nous remarquons que plus l'indice de la colonne augmente, plus le trajet dans le matériau augmente et plus l'atténuation s'accentue. De même, plus l'indice de la ligne augmente, plus la fréquence diminue (par convention) et plus l'atténuation est faible en fonction de la profondeur dans le matériau. Donc, si l'étagement des fréquences est tel que la première ligne ne conserve que le premier terme (c'est un peu caricatural, mais assez réaliste), la deuxième ligne les deux premiers termes, etc,... une matrice triangulaire inférieure bien conditionnée sera obtenue. Elle aura l'aspect d'une matrice d'intégration et sera facile à inverser pour retrouver les couches de valeurs de $\sigma(x, y)$ à chaque profondeur Z et ainsi reconstruire une image proche de la forme réelle du défaut.

Ceci est rendu possible par la vitesse de calcul de la méthode, compatible avec du temps réel et donc l'exploitation par un opérateur en CND. Nous allons voir dans le paragraphe suivant que l'on peut enrichir l'information et essayer d'accéder à plusieurs informations sur le contenu de chaque voxel discrétisant l'objet ainsi analysé

<u>Illustration :</u>

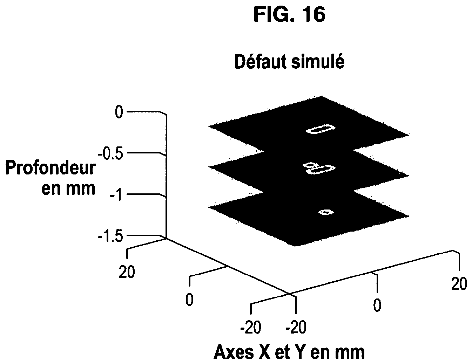

Dans l'exemple suivant, nous nous intéressons à un défaut volumique de type manque de matière, qui s'étend sur trois couches dans un milieu conducteur (alliage d'aluminium), selon la figure 16.

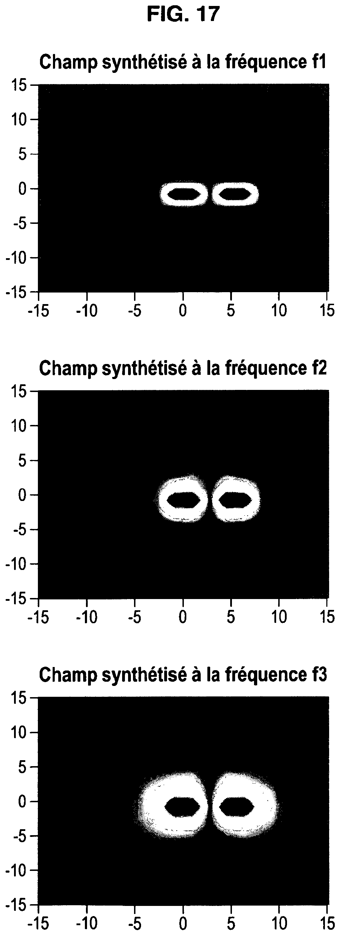

La distribution du champ magnétique normal résultant en surface de l'interaction de l'onde émise par l'ECI avec le défaut complexe est calculée par la méthode DPSM à trois fréquences f1 (ici 100 kHz), f2 (ici 10 kHz) et f3 (ici 1 kHz) et représentée en module figure 17.

La mise en oeuvre de la technique d'inversion multifréquence présentée ci-dessus permet d'obtenir les estimations de nappes de courants DPSM suivants :

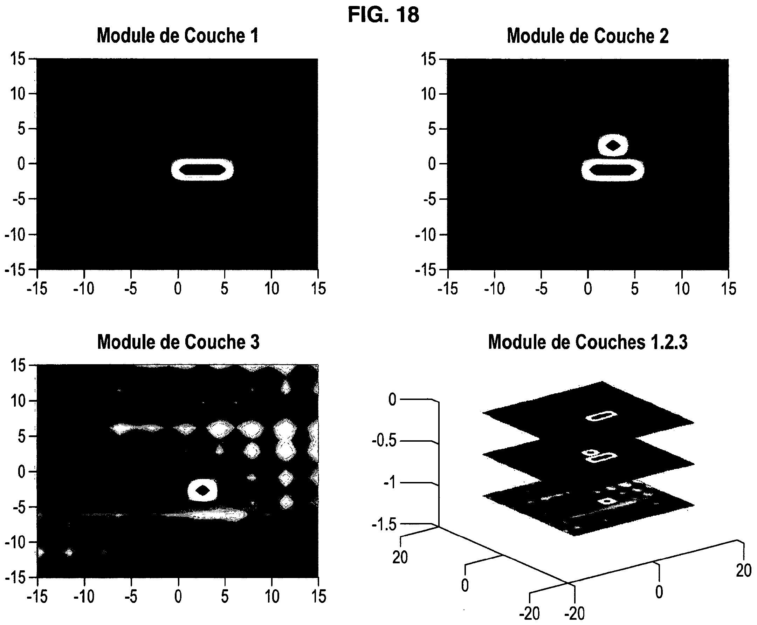

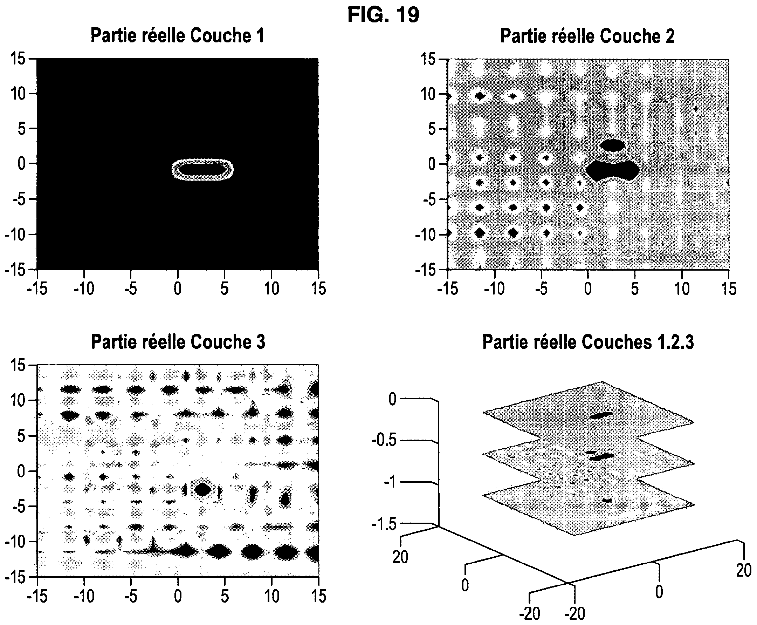

1. dans le cas d'images de champ présentant un rapport signal sur bruit favorable (64dB) : les trois couches du défaut de la figure 16 sont correctement estimées (figure 18), alors même que l'estimation faite à l'aide des fréquences f1, f2 et f3 exploitées isolément donne des résultats moins pertinents pour les couches les plus profondes (figure 19).

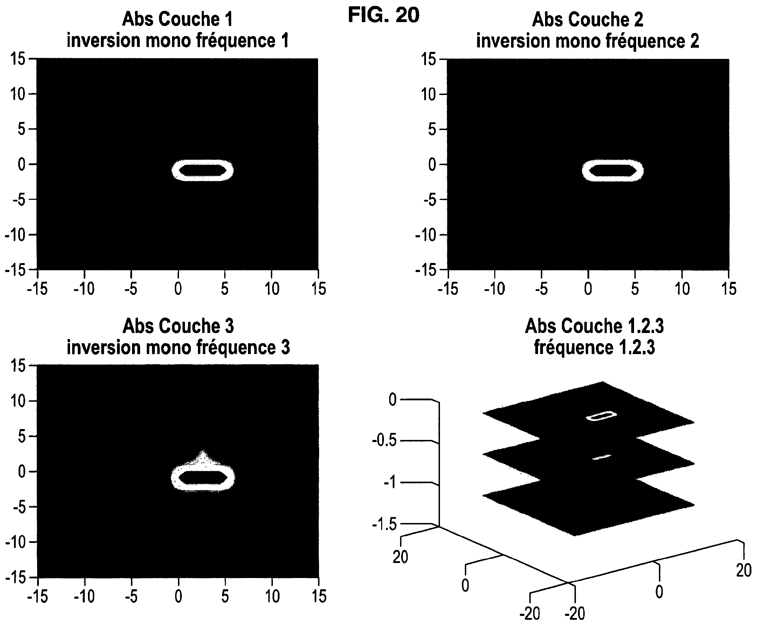

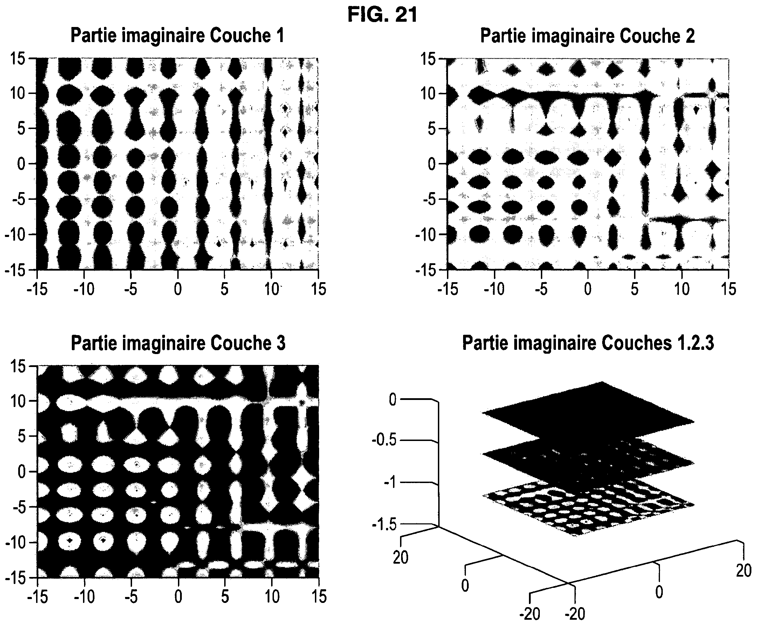

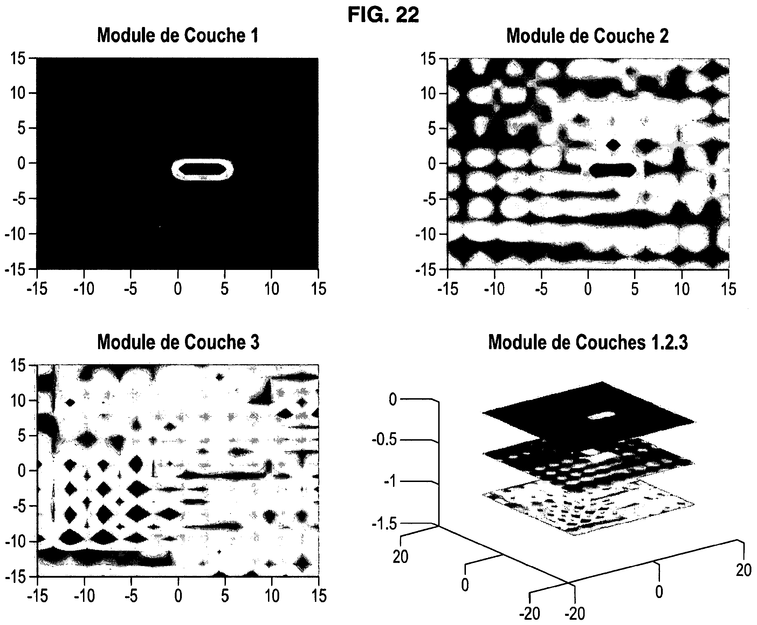

2. Dans le cas d'images de champ présentant un rapport signal sur bruit plus défavorable (44 dB) : les résultats d'estimation multifréquences sont présentés dans les figures en partie réelle (figure 20), imaginaire (figure 21) et en module (figure 22).

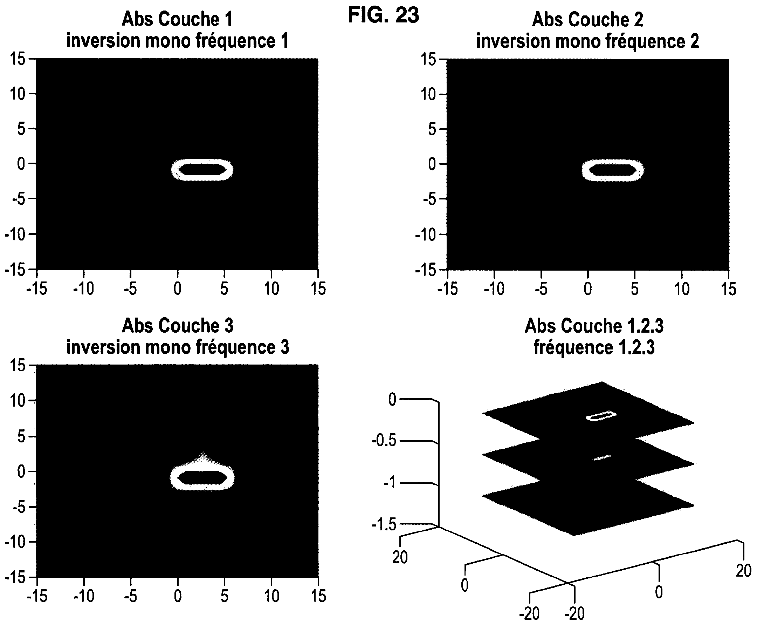

Les résultats présentés ci dessus peuvent être améliorés en affinant la discrétisation (maillage) du domaine d'étude, limitée pour des raisons pratiques à 18 X 18 pixels par couches. Ces résultats doivent être comparés à ceux obtenus dans les même conditions mais en utilisant une seule fréquence d'observation (figure 23 : estimation des couches DPSM relatives au défaut, après inversion mono-fréquence à f1=100kHz, puis f2 = 10kHz puis f3=1kHz pour le défaut de la figure 16, à partir d'images de champ synthétiques de rapport signal sur bruit 44dB).

Ces résultats valident la faisabilité et l'intérêt de l'approche multifréquence de l'estimation des couches de nappes de courants DPSM pour une amélioration de la caractérisation des défauts complexes.

• VII- QUATRIEME EVOLUTION : CHAMP TOURNANT

En fait, dans l'expression précédente (22), les valeurs de $\sigma_i$ qui composent le vecteur $\overrightarrow{\sigma_1}$, par exemple, sont considérées comme constantes dans le voxel $\Delta V = \Delta X.\Delta Y.\Delta Z$. Si nous nous intéressons de plus près à cette équation, nous voyons que dans le voxel considéré, autour de la profondeur $Z_1$, $Z_2$, ou $Z_3$, $\sigma_i$ s'écrit plutôt comme une intégrale volumique :

$$\sigma_i = \frac{1}{\Delta X \Delta Y \Delta Z} . \int_{-\Delta X/2}^{+\Delta X/2} \int_{-\Delta Y/2}^{+\Delta Y/2} \int_{-\Delta Z/2}^{+\Delta Z/2} \sigma(x,y,z).dx.dy.dz \qquad (23)$$

Remarquons que cette écriture intègre le volume du voxel $\Delta V$ qui apparaissait dans l'équation générale matricielle précédente (22). Si la conductivité n'évolue que de façon lente à l'intérieur du voxel et d'un voxel à l'autre, il est possible de confondre $\sigma(x, y, z)$ avec $\sigma_i$, qui devient la valeur volumique moyenne de $\sigma(x,y,z)$ dans le voxel considéré.

Si la variation est brutale (présence de fissure par exemple), alors il convient d'examiner le problème différemment. D'une part, s'il n'y a que deux valeurs prises par la variation de conductivité $\sigma_i$ , à savoir 0 ou $\sigma_0$, $\sigma_i$ s'écrit :

$$\sigma_i = \frac{1}{\Delta X \Delta Y \Delta Z} . \int_{-\Delta X/2}^{+\Delta X/2} \int_{-\Delta Y/2}^{+\Delta Y/2} \int_{-\Delta Z/2}^{+\Delta Z/2} \sigma(x,y,z).dx.dy.dz = \frac{\sigma_0.dv}{\Delta V} \qquad (24)$$

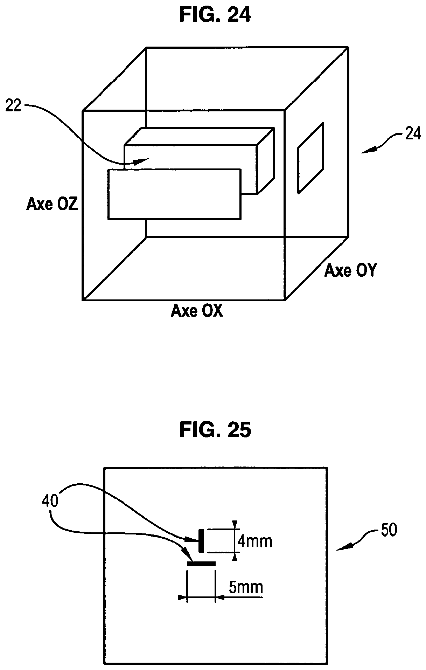

dv =dx.dy.dz est le volume du défaut (22, fig 24) situé à l'intérieur du voxel $\Delta V$ (24, fig 24).

D'autre part, dans un appareil à courants de Foucault l'ECI, la perception du défaut se fera essentiellement sur la surface perpendiculaire aux courants induits, l'information étant proportionnelle à la surface projetée sur ce plan : surface verte si les courants d'excitation sont orientés selon l'axe OX, surface bleue dans l'autre cas (axe OY).

Par conséquent, le signal recueilli conduisant à l'estimation de la variation de conductivité dans le pixel prendra la forme suivante :

\* Excitation selon l'axe OY : nous 'voyons' la section maximale correspondant à un Y donné, signal peu dépendant de la 'profondeur' réelle du défaut selon OY :

$$\sigma_{iXoZ} = \frac{1}{\Delta X \Delta Y \Delta Z} . \int_{-\Delta X/2}^{+\Delta X/2} \int_{-\Delta Z/2}^{+\Delta Z/2} \sigma(x,y,z).dx.dz = \Delta Y.\frac{\sigma_0.dx.dz}{\Delta V} = \frac{\sigma_0.dx.dz}{\Delta X.\Delta Z} \qquad (25)$$

\* Excitation selon l'axe OX : nous 'voyons' la section maximale correspondant à un X donné, signal peu dépendant de la 'profondeur' réelle du défaut selon OX :

$$\sigma_{iYoZ} = \frac{1}{\Delta X \Delta Y \Delta Z} . \int_{-\Delta Y/2}^{+\Delta Y/2} \int_{-\Delta Z/2}^{+\Delta Z/2} \sigma(x,y,z).dy.dz = \Delta X.\frac{\sigma_0.dy.dz}{\Delta V} = \frac{\sigma_0.dy.dz}{\Delta Y.\Delta Z} \qquad (26)$$

Nous voyons que si nous voulons reconstituer la géométrie exacte de l'objet à l'intérieur du voxel, il nous manque au moins une équation, car il faut estimer dx, dy, et dz.

Illustration : la figure 25 montre une image de fissure 40 en forme de 'T' dans un plaque 50massive épaisse (20mm) en inconel (conductivité 1MS/m). La profondeur du défaut est 1mm, et les ouvertures sont 1mm: si nous considérons que dz est connu (et par exemple égal ou fixé par convention à $\Delta Z$), alors il est possible de retrouver, d'après les deux expressions précédentes (25 et (26), les valeurs de dx et dy en créant une excitation respectivement selon les axes OY et OX.

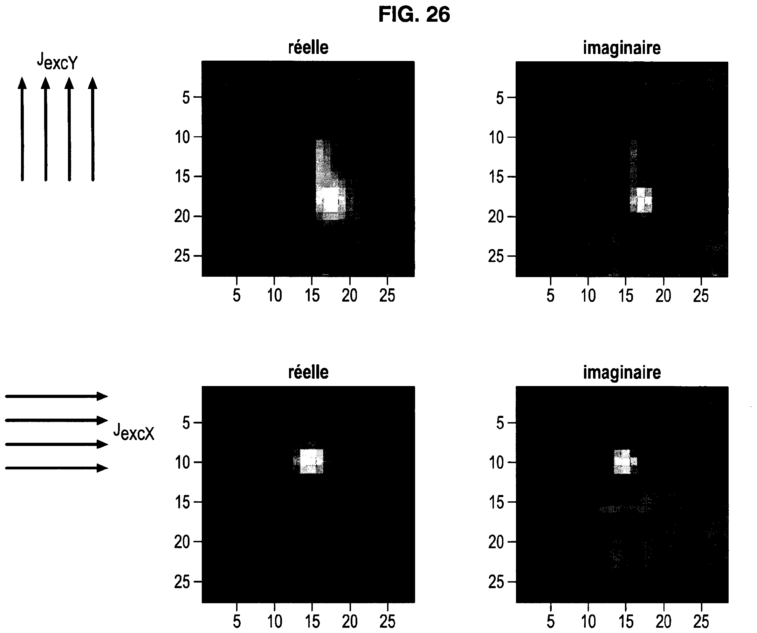

La figure 26 montre les cartographies de champ Hz relevées à la surface de la cible à l'aide de l'imageur ECI. Ces cartographies résultent des interactions entre les courants d'excitation et le défaut, quand ceux-ci sont orientés selon OY (vignettes du haut) et OX (vignettes du bas).

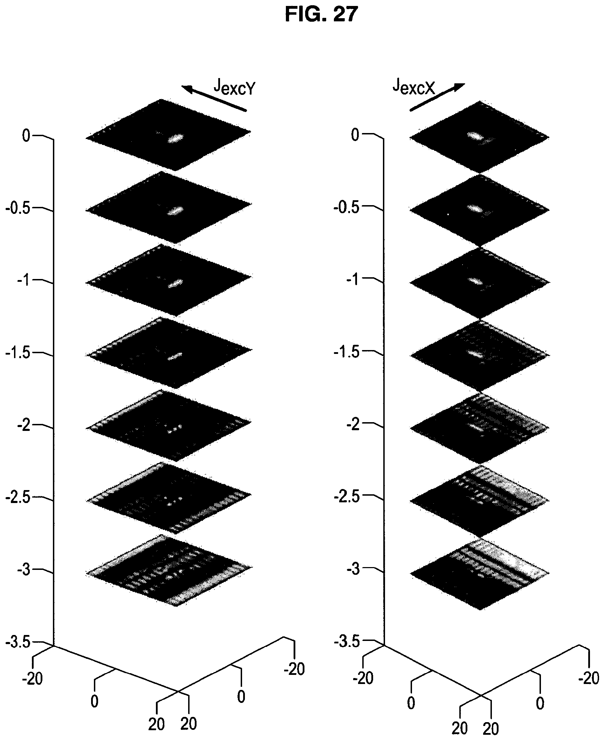

La figure 27 montre les résultats d'estimation des nappes de courants DPSM, pour des profondeurs différents, dans le cas de l'excitation selon OY (vignettes de gauche) et selon OX (vignettes de droite). Dans les deux cas, les estimations sont obtenues sans tamisage. Nous remarquons que la barre du « T » orientée selon OX est particulièrement bien estimée quand elle est excitée selon OY, et vice-versa. Nous remarquons également que les nappes de courants estimées en profondeur ne sont pas « physiques » (pas de défaut au delà de 1mm).

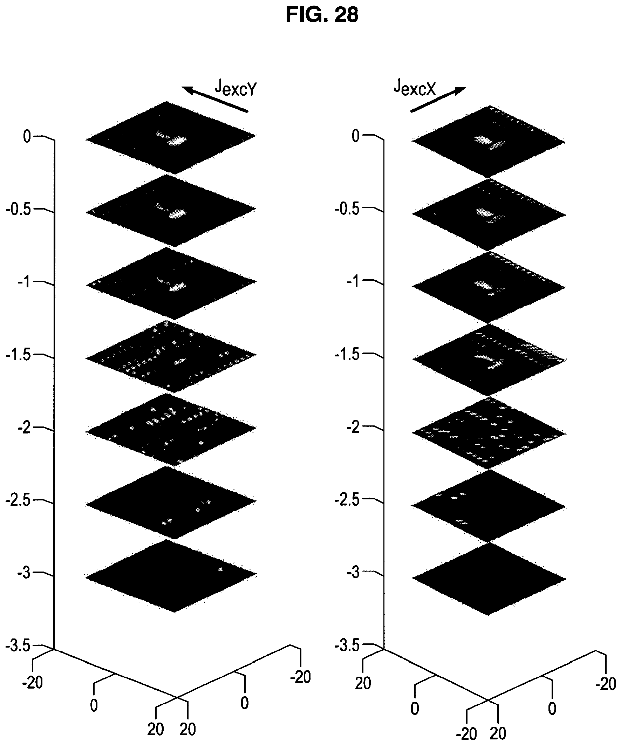

La figure 28 montre les même estimations, mais après tamisage en module et en phase. Les nappes de courants non « physiques » qui sont estimées en profondeur sont largement éliminées.

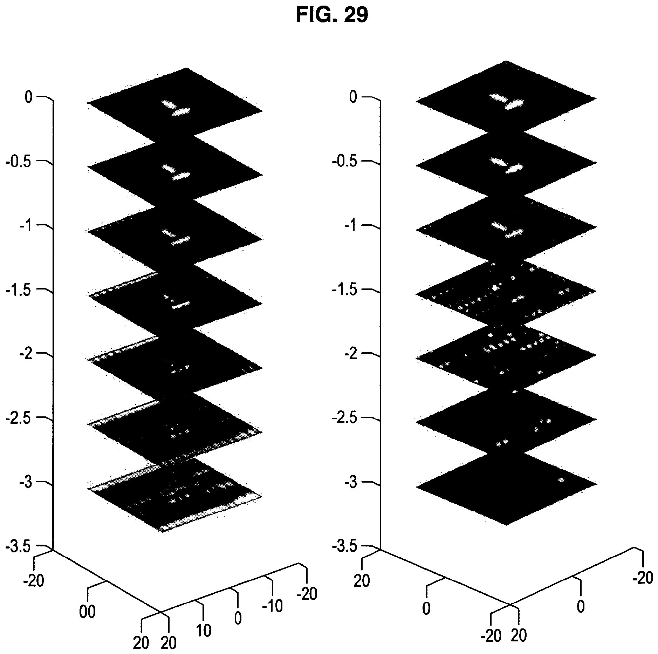

Enfin, la figure 29 présente un résultat d'estimation des nappes de courants DPSM, à partir des résultats obtenus selon OX et OY. Les nappes de courants « pertinentes » obtenues dans les deux cas sont conservées dans l'estimation finale à l'aide d'une analyse en composante principale (sans (à gauche) ou avec (à droite) tamisage). Nous remarquons que les nappes de courants estimées permettent de visualiser les deux barres du « T » avec des intensités équivalentes.

Il se dégage de ces équations que, dans un appareil à courants de Foucault comme l'imageur ECI qui est apte à 'éclairer' l'objet sous un angle $\alpha$ quelconque dans le plan XOY, (dans cet exemple, nous avons supposé dans les calculs précédents que les lignes de courants induites étaient orientées selon l'axe OY, ou OX ce qui donne respectivement $\alpha = \pi/2$ ou $\alpha = 0$), les variations de $\sigma(x, y)$ sont essentiellement détectables selon l'axe transversal aux courants induits (axe OX), et intégrées (ou filtrées, dans un cas plus général) selon l'autre axe (OY).

Il est à remarquer que, plus généralement, nous considérerons que l'intégration selon l'axe d'excitation, de $-\Delta X/2$ à $+\Delta X/2$ (respectivement $\Delta Y$) peut comporter une fonction de transfert et devenir une convolution (par exemple, dans le cas des courants de Foucault, si nous conservons la valeur maximum de $\sigma(x, y)$ au lieu d'intégrer simplement selon l'axe OX (respectivement OY), la réponse impulsionnelle devient analogue à celle d'un 'bloqueur d'ordre 0'.

Si nous résumons les concepts précédents en introduisant la notion d'axe de projection ou axe préférentiel de détectabilité, ainsi qu'un axe de projection quelconque $\vec{U}$, nous allons faire apparaître perpendiculairement à cet axe une projection de $\sigma(x, y)$ selon une fonction de transfert connue (intégration ou bloqueur d'ordre 0,...). Par contre, nous verrons bien les détails selon l'axe transversal aux courants. Cela revient à convoluer avec une fonction de transfert bidimensionnel, présentant une résolution différente selon les axes OX et OY. Nous considérons ici que le signal présente des propriétés de séparabilité.

Pour donner un exemple simple, si nous prenons la valeur maximale de $\sigma(x, y)$ pour chaque valeur de x, (ce qui correspond à l'ombre portée de $\sigma(x, y)$ sur un plan y=constante), l'argument de l'intégrale selon l'axe OX devient $\sigma_{maxX}(x, y)$ si les courants d'excitation sont orientés selon l'axe OX :

$$\sigma_i(x) = \frac{1}{\Delta Y} . \int_{-\Delta Y/2}^{+\Delta Y/2} \sigma_{\max Y}(x, y).dy \tag{27}$$

et $\sigma_{maxY}(x, y)$ selon l'axe OY si les courants d'excitation sont orientés selon OY:

$$\sigma_i(y) = \frac{1}{\Delta X} . \int_{-\Delta X/2}^{+\Delta X/2} \sigma_{\max X}(x, y).dx \tag{28}$$

Pour un courant d'excitation orienté selon un axe $\vec{U}$ quelconque, formant un angle $\alpha$ avec l'axe OX, nous obtiendrions dans le nouveau repère [U,V] où $\vec{V}$ est perpendiculaire à $\vec{U}$, de coordonnées (u,v):

$$\sigma(v) = \frac{1}{\Delta U} . \int_{-U\min}^{+U\max} \sigma(u\cos(\alpha) - v\sin(\alpha), \ u\sin(\alpha) + v\cos(\alpha)).du \tag{29}$$

Soit :

$$\sigma(x\sin(\alpha) + y\cos(\alpha)) = \frac{1}{\Delta U}.\int_{-U\min}^{+U\max} \sigma(u\cos(\alpha) - v\sin(\alpha), \ u\sin(\alpha) + v\cos(\alpha)).du \quad (30)$$

Nous retrouvons les relations précédentes si $\alpha$ = 0. Par exemple : U est orienté selon l'axe OX, V selon OY, et cela donne :

$$\sigma(y\cos(\alpha)) = \frac{1}{\Delta U}.\int_{-U\min}^{+U\max} \sigma(u\cos(\alpha), \ v\cos(\alpha)).du \quad (31)$$

Soit :

$$\sigma(y) = \frac{1}{\Delta U}.\int_{-U\min}^{+U\max} \sigma(u,v).du \ = \ \frac{1}{\Delta X}.\int_{-\Delta X/2}^{+\Delta X/2} \sigma(x,y).dx \quad (32)$$

Cette relation nous rapproche des méthodes classiques de tomographie (à rayons X par exemple), dans lesquelles un objet est 'éclairé' selon des angles différents : l'image résulte de l'intégration de l'atténuation le long du trajet parcouru par le rayon d'excitation, mais est bien résolue sur l'axe transversal. L'objet ($\sigma(x, y)$ dans notre cas) est alors reconstitué par des méthodes telles que la transformée de Fourier inverse par exemple. Donc pour reconstituer l'image d'un pixel, nous pouvons 'enrichir' aisément l'information par un éclairage selon un champ tournant'

*Remarque : Relations de changement de repère :*

$$\begin{pmatrix} x \\ y \end{pmatrix} = \begin{pmatrix} \cos(\alpha) & -\sin(\alpha) \\ \sin(\alpha) & \cos(\alpha) \end{pmatrix} \begin{pmatrix} u \\ v \end{pmatrix} \quad (33)$$

*Et:*

$$\begin{pmatrix} u \\ v \end{pmatrix} = \begin{pmatrix} \cos(\alpha) & \sin(\alpha) \\ -\sin(\alpha) & \cos(\alpha) \end{pmatrix} \begin{pmatrix} x \\ y \end{pmatrix} \quad (34)$$

• VIII- CINQUIEME EVOLUTION : IMAGERIE TOMOGRAPHIQUE

Il s'agit de proposer, dans cette évolution de l'invention, une méthode générique pour l'analyse tomographique de milieux, notamment conducteurs (capteurs à courants de Foucault par exemple). Le principe général d'une telle mesure (quelle que soit la grandeur exploitée comme vecteur de l'information : champ électrique, électromagnétique, ultrasons..) consiste à faire progresser cette grandeur le long d'un chemin sur lequel se trouve un matériau dont les propriétés physiques peuvent varier. Les propriétés en question sont liées à la grandeur physique utilisée : permittivité pour le champ électrique, conductivité pour les courants de Foucault, etc... La nature de l'onde 'porteuse' est choisie en fonction du paramètre recherché. Cette méthode générique consiste, à partir d'un ensemble d'observations réalisées grâce aux capteurs, à reconstruire une estimée de la grandeur, sous forme cartographique par exemple.

**Exemple simple :**

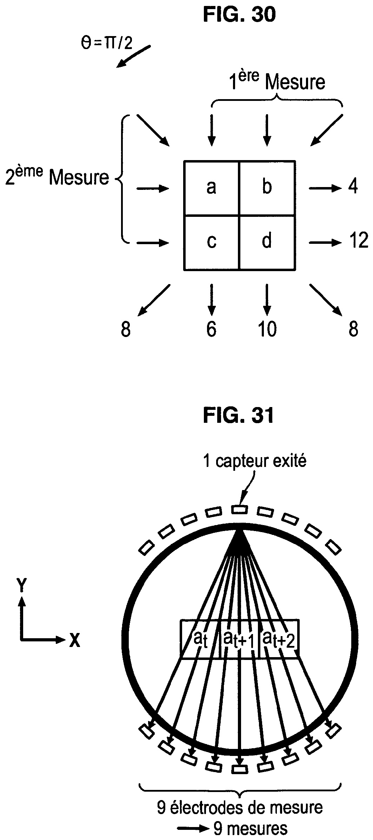

Considérons pour commencer un exemple simple (figure 30) : à l'aide d'un capteur qui réalise une mesure pour plusieurs positions (plusieurs chemins dans notre cas), nous cherchons à remonter aux propriétés physiques de l'objet (de valeurs 'a', 'b', 'c' et 'd', au sein des 4 pixels représentés). Dans notre exemple, nous considérons un capteur assez simple qui réalise la somme des valeurs des propriétés le long du chemin traversé par l'onde. La valeur mesurée est inscrite en bas ou à droite de la figure. Nous pouvons réaliser une mesure 'verticale' (pour une certaine position du dispositif de mesure), puis effectuer une rotation ($\theta=\pi/2$) du capteur par rapport à l'objet et obtenir ainsi une mesure 'horizontale'. On peut écrire les résultats de ces mesures (*vecteur d'observation*) sous forme matricielle :

$$\begin{pmatrix} 6 \\ 10 \\ 4 \\ 12 \end{pmatrix} = \begin{pmatrix} 1 & 0 & 1 & 0 \\ 0 & 1 & 0 & 1 \\ 1 & 1 & 0 & 0 \\ 0 & 0 & 1 & 1 \end{pmatrix} . \begin{pmatrix} a \\ b \\ c \\ d \end{pmatrix} \Leftrightarrow OBS = M.A \qquad (35)$$

Nous appelions M, la matrice de transfert du capteur, *matrice d'observation.* Cette matrice M, bien que carrée, n'est cependant pas inversible : il manque des informations car les lignes peuvent être liées entre elles, les sommes n'étant pas pondérées différemment d'une ligne à l'autre : dans ce cas il faut compléter l'ensemble des mesures, ce qui donnera plus d'équations que d'inconnues.

Pour compléter notre observable, nous rajoutons des mesures (en diagonale sur la figure 30). Ainsi, une mesure est composée maintenant de trois 'chemins', et une rotation du dispositif nous permet d'obtenir une autre série de mesure, comme dans le cas précédent.

Nous considérons dans cet exemple simple que les mesures réalisées dépendent directement (et linéairement) du cheminement de la grandeur physique employée (onde électromagnétique ou acoustique par exemple) : les mesures en diagonale 'parcourant' un chemin plus grand, nous les affectons d'un coefficient $\sqrt{2}$ au lieu de 1 (à des fins d'illustration).

La matrice de transfert M devient alors :

$$M = \begin{pmatrix} \begin{pmatrix} 0 & \sqrt{2} & \sqrt{2} & 0 \\ 0 & 1 & 0 & 1 \\ 1 & 0 & 1 & 0 \end{pmatrix} \\ \begin{pmatrix} \sqrt{2} & 0 & 0 & \sqrt{2} \\ 1 & 1 & 0 & 0 \\ 0 & 0 & 1 & 1 \end{pmatrix} \end{pmatrix} \qquad (36)$$

Nous pouvons toujours écrire :

$$OBS = M.A \qquad (37)$$

Nous obtenons les valeurs de A par pseudo inverse de M:

$$A = (M^t M)^{-1}.M^t.OBS \qquad (38)$$

Nous trouvons bien : a=1, b=3, c=5, d=7.

Après cet exemple, donnons une application plus 'réelle' de ce concept, dans laquelle nous allons illustrer l'adaptation à la tomographie de diffraction, et l'exploitation de la méthode DPSM pour identifier la matrice d'observation M de façon originale. Deux variantes vont être présentées dans ce qui suit, selon qu'il y a un accès à plusieurs des faces d'un dispositif (tel que ce qui a été présenté dans l'exemple simple), ou bien un accès à une seule des faces d'un dispositif. Ce dernier point permettra d'illustrer l'application de ce procédé de tomographie au dispositif à courants de Foucault décrit précédemment, dans lequel la mesure est effectuée dans un plan xOy à la surface d'un métal contenant des défauts ou inclusions, et dont nous recherchons une image.

**Exemple : deux ou plusieurs faces accessibles**

Nous nous intéressons ici à une application en électrostatique avec une géométrie cylindrique dans laquelle nous avons accès, pour la mesure, sur le pourtour de la géométrie (cf figure 31).

Nous disposons de P= 9 capteurs de mesures, de N données à déterminer (les $a_n$). Pour une position donnée des électrodes, nous écrivons l'équation d'observation qui peut être formulée sous forme intégrale :

$$S(p) = \int_x \int_y h(p, x, y) a(x, y).dxdy \qquad (39)$$

avec $a(x, y) = a_n$ (à chaque couple (x,y) du découpage en pixels est associé un indice n).

*Remarque : la fonction h(p,x,y) est une fonction de transfert qui dépend de la position $p(x_p, y_p)$ de la mesure. Cette fonction est différente pour chaque position p, et n'est donc pas stationnaire. La fonction (39) n'est donc pas une convolution. Donc, toute tentative de déconvolution par identification de la fonction de transfert serait probablement délicate voire impossible.*

La discrétisation du domaine permet une écriture analogue à celle employée pour l'équation (35), en opérant une discrétisation spatiale selon $\Delta x$ et $\Delta y$ :

$$S(p) = \sum_{n=1}^{N} h(p, n).a(n) \Delta x.\Delta y \qquad (40)$$

Par exemple, dans le cas d'un capteur capacitif, il est possible d'écrire l'équation d'observation sous la forme:

$$S(p) = \frac{1}{C(p)} = \oint_l \frac{1}{\varepsilon(l)} \frac{1}{s(l)} dl \qquad (41)$$

Cette équation rend compte des variations de permittivité $\varepsilon(l)$ le long du trajet suivi par la grandeur physique exploitée (ici un champ électrique), et comme les lignes de champ ne restent pas strictement parallèles, la surface qu'elles occupent $s(l)$ varie également. Cette écriture fait apparaître la grandeur mesurée comme la mise en série de capacités élémentaires. C'est pour cette raison que nous utilisons ici la valeur $\dfrac{1}{C(p)}$ comme information capteur.

Nous pouvons écrire cette équation en discrétisant le 'trajet' l :

$$\frac{1}{C(p)} = \sum \frac{1}{\varepsilon(p)} \frac{1}{s(l)} \Delta l \qquad (42)$$

Après cet exemple, revenons au cas général, et écrivons l'équation (40) sous une forme matricielle :

$$S = M.\begin{pmatrix} a_1 \\ a_2 \\ \vdots \\ a_N \end{pmatrix} = M.A \qquad (43)$$

avec M la matrice de transfert, ici de dimension (9,N).

Compte tenu de la remarque précédente sur la non stationnarité de la fonction de transfert h, la matrice M n'est pas une matrice circulante, ni de Toeplitz.

L'équation d'observation donne P informations. Ici, nous disposons de neuf informations, ce qui n'est pas suffisant pour les N inconnues. Il est nécessaire d'enrichir alors le signal (augmentation de l'entropie de l'information) en réalisant une nouvelle mesure après avoir tourné le capteur d'un angle $\theta$ (choix, par exemple, de m positions de mesures). L'équation d'observation (40) deviendrait, si on avait fait tourner l'objet et laissé le capteur fixe (ce qui revient au même) :

$$S_\theta(p) = \int_x \int_y h(p, x, y) a(x\cos(\theta) - y\sin(\theta), x\sin(\theta) + y\cos(\theta)).dxdy \qquad (44)$$

Un changement de variable fait apparaître des termes sinus et cosinus dans l'intégrale, qui prend alors l'allure d'une transformée de Fourier.

Dans notre cas, nous conserverons la forme matricielle de l'équation d'observation, qui pour chaque nouvelle mesure à angle $\theta_i$ s'enrichit d'une nouvelle sous-matrice d'observation $M_{\theta_1}$.

L'équation globale, sous sa forme matricielle, peut donc s'écrire comme ceci :

$$S = \begin{pmatrix} S_{\theta_1} \\ S_{\theta_2} \\ \vdots \\ S_{\theta_m} \end{pmatrix} = \begin{pmatrix} M_{\theta_1} \\ M_{\theta_2} \\ \vdots \\ M_{\theta_m} \end{pmatrix} \begin{pmatrix} a_1 \\ a_2 \\ \vdots \\ a_N \end{pmatrix} = Mglobale. \begin{pmatrix} a_1 \\ a_2 \\ \vdots \\ a_N \end{pmatrix} \qquad (45)$$

**Exemple : une seule face accessible**

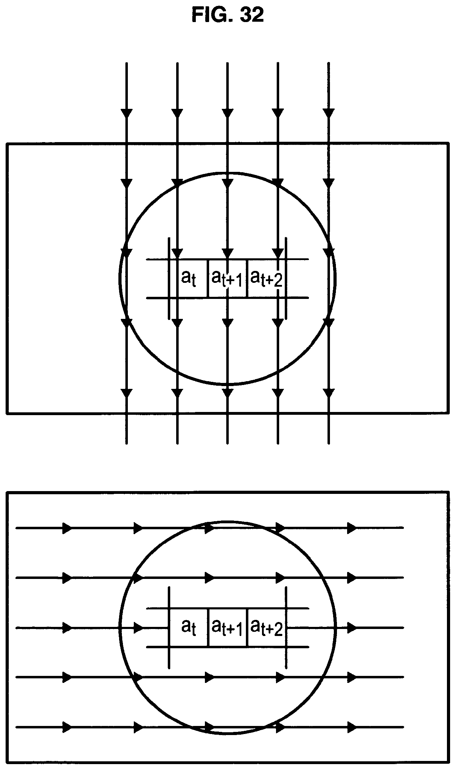

Considérons un capteur à courant de Foucault (ECI) repris brièvement figure 32. Cette figure fait apparaître les courants d'excitation créés par des bobines inductrices (non représentées ici), le matériau sous test et sa discrétisation en vue de la reconstitution de l'image, et la zone de mesure (circulaire sur ce dessin, et qui peut représenter le grenat du MOI). Ici, le vecteur d'observation est constitué par la grandeur que l'on peut observer en surface avec le grenat magnéto-optique: le champ $H_z$. Nous disposons de P points de mesure répartis sur la surface sensible. Notre vecteur d'inconnues est la quantité $\sigma(x, y)$ lié à une discrétisation ($\Delta x$, $\Delta y$) mise sous la forme lexicale $\sigma(n)$. Afin d'enrichir l'information, comme précédemment, nous changeons l'angle d'incidence des courants d'excitation.

En réalisant ceci, nous pouvons obtenir une relation matricielle entre notre observation et nos inconnues : cette équation est identique a l'équation (45).

La matrice M est donc définie par la relation (45), pour une orientation des courants d'excitation $\theta_i$ :

$$S = M_{\theta_i}.A \Leftrightarrow S = \begin{pmatrix} M_{11} & M_{12} & M_{13} & \cdots & M_{1N} \\ M_{21} & M_{22} & M_{23} & \cdots & M_{2N} \\ M_{31} & M_{32} & M_{33} & \cdots & M_{3N} \\ \vdots & \vdots & \vdots & & \vdots \\ M_{P1} & M_{P2} & M_{P3} & \cdots & M_{PN} \end{pmatrix} \begin{pmatrix} a_1 \\ a_2 \\ a_3 \\ \vdots \\ a_N \end{pmatrix} \qquad (46)$$

Lorsque toutes les valeurs des pixels $a_i$ sont identiques et correspondent à la valeur de conductivité $\sigma_0$, les courants d'excitation ne sont pas déviés et aucune composante de champ normal à la surface n'apparaît. Il est donc plus logique de définir a(n) à partir des variations de $\sigma(n)$ par rapport à $\sigma_0$ (simplement par convention):

$$a(n) = \frac{\sigma_0 - \sigma(n)}{\sigma_0} \qquad (47)$$

A l'aide du modèle DPSM, nous allons réaliser une série de N modélisations, dans lesquelles nous allons déplacer un petit défaut à $\sigma(n) = 0$, donc $a(n) = 1$, dans un milieu à $\sigma(k \neq n) = \sigma_0$.

La relation (46) devient, si, par exemple, le pixel N°3 est le petit défaut:

$$S = M_{\theta_i}.A \Leftrightarrow S = \begin{pmatrix} M_{11} & M_{12} & M_{13} & \cdots & M_{1N} \\ M_{21} & M_{22} & M_{23} & \cdots & M_{2N} \\ M_{31} & M_{32} & M_{33} & \cdots & M_{3N} \\ \vdots & \vdots & \vdots & & \vdots \\ M_{P1} & M_{P2} & M_{P3} & \cdots & M_{PN} \end{pmatrix} \begin{pmatrix} a_1 = 0 \\ a_2 = 0 \\ a_3 = 1 \\ \vdots \\ a_N = 0 \end{pmatrix} \qquad (48)$$

Dans ce cas, le vecteur de sortie, S, est égal à la troisième colonne de M :

$$S = M_{\theta_i}.A \Leftrightarrow S = \begin{pmatrix} M_{13} \\ M_{23} \\ M_{33} \\ \vdots \\ M_{P3} \end{pmatrix} \qquad (49)$$

Ainsi, toute la matrice M peut être identifiée, colonne par colonne, à partir du modèle DPSM qui est paramétrable facilement, et permet de créer des plans d'expérience.

Dans le cas où il y a un accès à deux faces d'un problème pour effectuer des mesures, nous discrétisons selon x et y, et nous pouvons obtenir une troisième dimension en progressant par pas $\Delta z$ le long de la génératrice, (selon l'axe z). Ceci permet d'obtenir des images tridimensionnelle, discrétisées selon des voxels $\Delta x$, $\Delta y$ et $\Delta z$.

En imagerie courants de Foucault, tel que le système est décrit ici (et correspond à la majorité des cas), nous avons accès qu'à une seule face, discrétisée selon $\Delta x$ et $\Delta y$. L'accès à une grandeur $\Delta z$ peut être réalisé comme présentée au point VI précédent, en réalisant plusieurs mesures à plusieurs fréquences (cf l'équation multifréquences, rappelée ici pour mémoire) :

$$\begin{bmatrix} \vec{H}_{F1} \\ \vec{H}_{F2} \\ \vec{H}_{F3} \end{bmatrix} = \Delta V . \begin{bmatrix} M_{11}.diag(Q_{11}.I_1) & M_{12}.diag(Q_{21}.I_1) & M_{13}.diag(Q_{31}.I_1) \\ M_{21}.diag(Q_{12}.I_2) & M_{22}.diag(Q_{22}.I_2) & M_{23}.diag(Q_{32}.I_2) \\ M_{31}.diag(Q_{13}.I_3) & M_{32}.diag(Q_{23}.I_3) & M_{33}.diag(Q_{33}.I_3) \end{bmatrix} * \begin{bmatrix} \vec{\sigma}_1 \\ \vec{\sigma}_2 \\ \vec{\sigma}_3 \end{bmatrix} \quad (22)$$

Rappelons que les grandeurs $\vec{\sigma}_1$, $\vec{\sigma}_2$, $\vec{\sigma}_3$ représentent les valeurs des écarts de conductivités à l'intérieur de voxels résultant du découpage en $\Delta x$ et $\Delta y$ de couches XoY situées à des profondeurs k=1, 2, et 3 (espacées verticalement de $\Delta z$). Les matrices $M_{ik}$ sont les matrices DPSM directes, qui relient des petites variations de courants dans ces voxels au champ $\vec{H}_{Fi}$ mesuré en surface, pour une excitation à la fréquence $F_i = F_1$, puis $F_2$, $F_3$, etc...

Les matrices $Q_{ik}.I_k$ représentent les conditions d'excitation (courant d'excitation dans chaque voxel de la couche N° k pour une fréquence F indice i).

L'idée développée ici reprend exactement ce concept, et permet de l'étendre au cas où l'objet est éclairé sous des angles d'incidence différents : les blocs de matrices $M_{ki}.diag(Q_{ik}.I_k)$ (qui relient dans l'équation précédente la mesure $\vec{H}_{Fi}$ réalisée à fréquence indice i aux propriétés des voxels situés dans la couche N° k) sont alors constituées pour chaque couple i,k par la matrice Mglobale de l'équation (45), calculée pour une fréquence $F_i$, et pour une petite variation déplacée dans une couche à la profondeur k. Ce procédé, à angle d'incidence variable, enrichit l'entropie de l'équation (22) comme il enrichit celle de l'équation (43).

D'autre part, il est possible de réaliser une estimation des matrices blocs autrement qu'en faisant une approximation sur des petites variations de courant localement induites par les variations de conductivité, comme décrit dans la première partie de cette description. En effet, en supposant le système linéaire, on peut déplacer un voxel caractérisé par une conductivité différente de celle du matériau pour évaluer tous les termes de la matrice globale. Cette approche fait appel au modèle DPSM par exemple (on dessine un voxel de forme cubique et on lui fait parcourir successivement toutes les mailles volumiques dessinées dans le matériau), et peut également être réalisée expérimentalement.

L'avantage du procédé décrit ici est qu'il est possible aussi d'élaborer un découpage particulier (donc pas obligatoirement réalisé à base de voxels cubiques), adapté à la géométrie spécifique d'un problème : si nous devons imager un objet stratifié en plans parallèles (matériau composite carbone ou assemblage de tôles rivetées par exemple), le vecteur d'inconnues sera uniquement constitué par les valeurs des propriétés du matériau dans ces strates. Pour un objet à symétrie de révolution ou comportant un alésage, nous pourrions imaginer un découpage en coordonnées cylindriques, etc...

Remarquons également que, pour limiter l'effet d'éventuelles non linéarités, il est possible de se placer autour d'une configuration standard pour identifier les termes de la matrice Mglobale précédente. Dans cette configuration standard, à chaque voxel (indice n) est affecté une propriété physique $a_n$, ce qui conduit, par simulation ou expérimentation, à un vecteur d'observation $S_{standard}$. Nous identifions ensuite chaque colonne (indice n) de la matrice grâce à une petite variation additive $\Delta a_n$ des propriétés du voxel indice n :

$$S_{s\tan dard} = M_{\theta_i}.A_{s\tan dard} \Leftrightarrow S = \begin{pmatrix} M_{11} & M_{12} & M_{13} & \cdots & M_{1N} \\ M_{21} & M_{22} & M_{23} & \cdots & M_{2N} \\ M_{31} & M_{32} & M_{33} & \cdots & M_{3N} \\ \vdots & \vdots & \vdots & & \vdots \\ M_{P1} & M_{P2} & M_{P3} & \cdots & M_{PN} \end{pmatrix} \begin{pmatrix} a_1 \\ a_2 \\ a_3 \\ \vdots \\ a_N \end{pmatrix} \quad (50)$$

$$S = M_{\theta_i}.A \Leftrightarrow S = \begin{pmatrix} M_{11} & M_{12} & M_{13} & \cdots & M_{1N} \\ M_{21} & M_{22} & M_{23} & \cdots & M_{2N} \\ M_{31} & M_{32} & M_{33} & \cdots & M_{3N} \\ \vdots & \vdots & \vdots & & \vdots \\ M_{P1} & M_{P2} & M_{P3} & \cdots & M_{PN} \end{pmatrix} \begin{pmatrix} a_1 \\ a_2 \\ a_3 + \Delta a_3 \\ \vdots \\ a_N \end{pmatrix} \quad (51)$$

$$S - S_{s\tan dard} = M_{\theta_i}.(A - A_{s\tan dard}) = \Delta a_3. \begin{pmatrix} M_{13} \\ M_{23} \\ M_{33} \\ \vdots \\ M_{P3} \end{pmatrix} \quad (52)$$

Par exemple, si nous cherchons de la corrosion ou des petites fissures sur un assemblage riveté, nous dessinons la configuration normale, ce qui donne le vecteur $S_{standard}$, puis nous calculons M pour des petites variations de conductivité de chacun des voxels. La matrice Mglobale est composée ensuite à partir de toutes les matrices $M_{\theta_i}$, correspondant à une mesure sous angle d'incidence $\theta_i$.

**Exemples avec des défauts en forme de gélule**

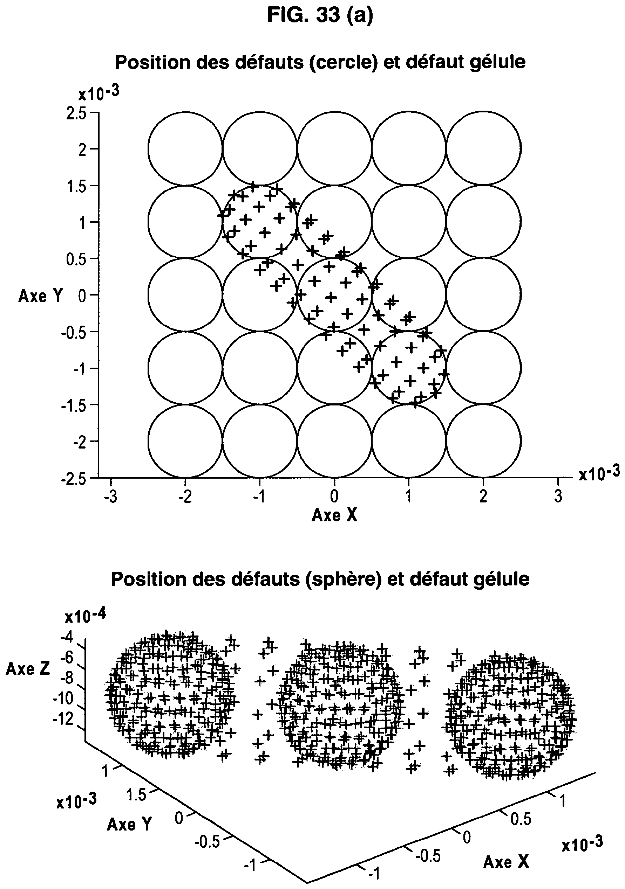

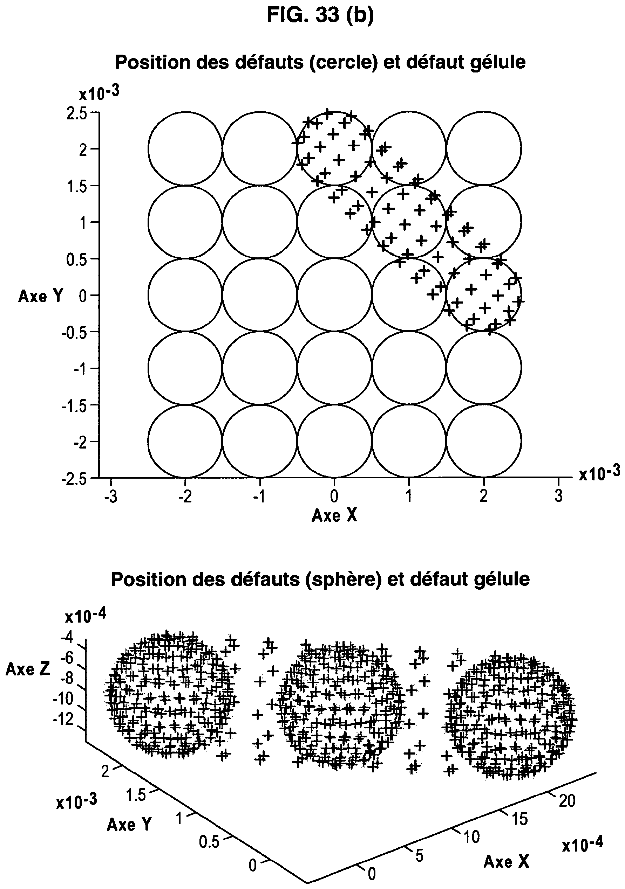

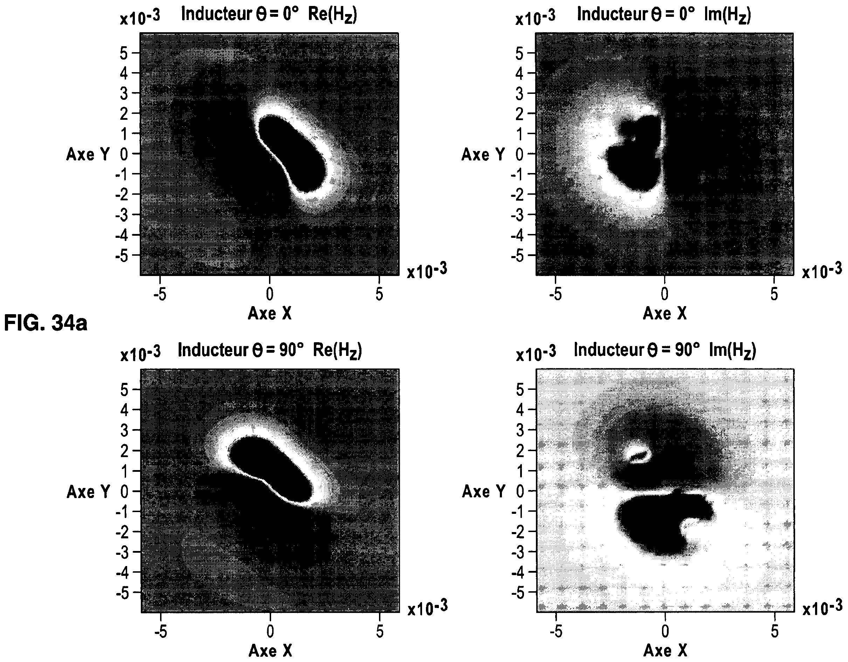

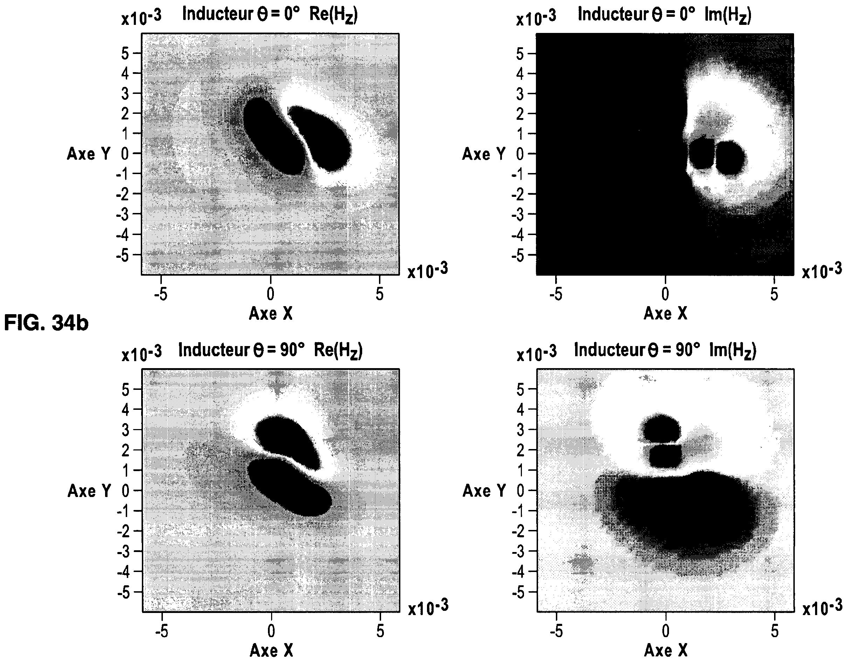

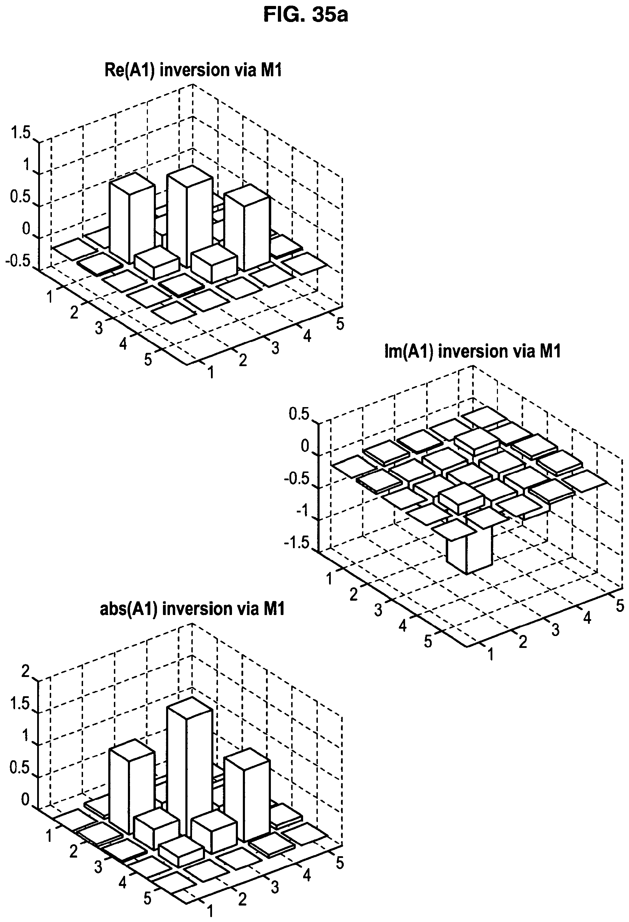

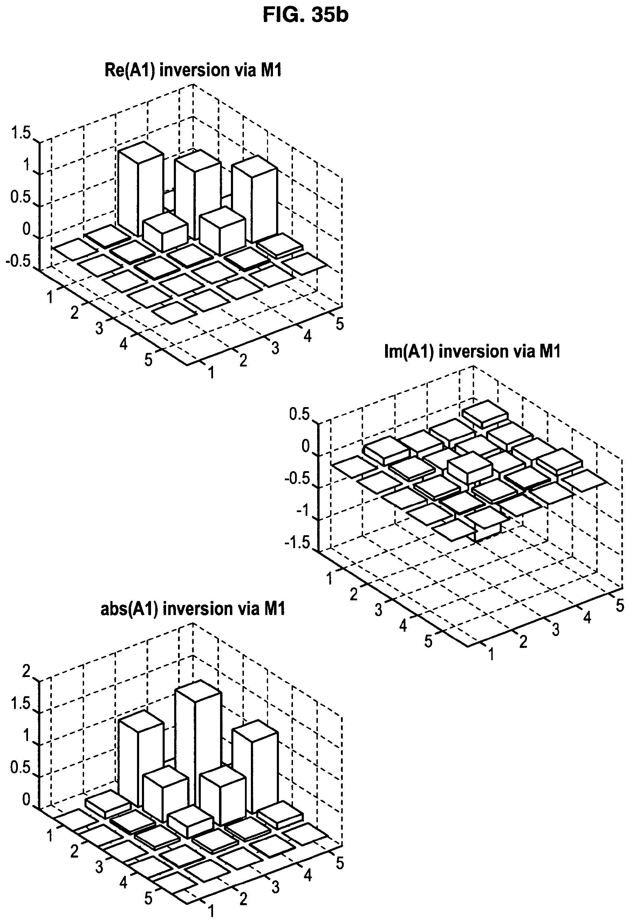

Dans les figures 33 à 35, nous illustrons l'application de la méthode à un défaut en forme de gélule à 45° dans un bloc de matériau en Aluminium, donc conducteur. L'avantage de la forme gélule est de représenter assez bien des défauts de type fissure qu'il est possible de rencontrer en CND. Dans une première série a, la gélule est centrée, alors que dans la deuxième série b, la gélule est non centrée. La figure 33 illustre la géométrie de test. La figure 34 représente des images obtenues dans les deux séries a et b avec un inducteur à 0° et à 90°. La figure 35 montre le résultat du test d'inversion dans les deux séries a et b par la méthode selon l'invention. Il est bien visible que le défaut en forme de gélule est bien identifié et repéré spatialement dans le bloc de matériau testé. Lors de ces tests, il a été démontré la robustesse et la fiabilité de la méthode en bruitant les images de la figure 34. La méthode donne toujours de bon résultats fiable avec un rapport signal sur bruit supérieur ou égale à environs• 0.1.

• IX- REALISATION D'UN DISPOSITIF APTE A METTRE EN OEUVRE LE PROCEDE SELON L'INVENTION

La réalisation d'un dispositif destiné à mettre en oeuvre le procédé selon l'invention qui vient d'être décrit va être brièvement abordée. Un tel dispositif comprend un système instrumental et un module d'estimation automatique de défauts, dans le cas servant d'exemple de la technique d'imagerie à courants de Foucault.

Le dispositif, ici dans cet exemple, comporte un imageur d'ECI (décrit dans les documents WO2005/001467 et WO 2007/135265, auxquels il est possible de se rapporter pour de plus amples informations), auquel est associé un ordinateur (de type PC par exemple) accueillant une interface homme machine (IHM) permettant de configurer et de piloter l'acquisition des images de champ magnétique et d'opérer l'estimation automatique et la visualisation des défauts.

Le module de d'estimation automatique de défauts peut opérer, de préférence, en temps réel, c'est à dire que l'estimation de défaut s'effectue au fil de l'acquisition des images CF (courants de Foucault). En effet, connaissant la structure à inspecter (par exemple joint riveté aéronautique dont la constitution sans défaut est connue), il est possible de pré-calculer les matrices de couplages nécessaires à la mise en oeuvre du procédé selon l'invention, aux fréquences d'excitation jugées pertinentes. Dès lors il est possible d'effectuer l'estimation des sources issues de la méthode DPSM en temps réel à partir de ces matrices pré-établies.

De manière générale, le procédé selon l'invention que nous venons de décrire permet donc l'estimation quantitative de défaut en END en retrouvant les caractéristiques d'un défaut à partir des observations d'une grandeur physique effectuées en surface de la structure, et de la connaissance des interactions entre l'objet à caractériser (le défaut) et l'onde émise par le dispositif mettant en oeuvre ledit procédé selon l'invention.

Actuellement, dans la pratique, cette estimation n'est possible que dans des cas triviaux, d'abord parce que le problème est « mal posé » (les observations disponibles sont insuffisantes pour « remonter » aux propriétés de l'objet recherché) et ensuite parce que nous ne disposons pas, dans le cas général, d'une expression analytique des interactions qui soit inversible.

Il est alors possible de procéder à une modélisation numérique ou semi-analytique des interactions, et à l'implantation d'un algorithme itératif d'ajustement des paramètres du modèle de telle sorte que le système s'approche au mieux des observations. Après convergence de cet algorithme d'optimisation, les paramètres estimés permettent de caractériser le défaut. Cette approche nécessite toutefois une mise en oeuvre très coûteuse en temps de calcul (modèles d'interactions exhaustifs donc lourds, procédé itératif) et pose le problème de la convergence et de la robustesse de l'algorithme itératif dont la résolution nécessite l'introduction de connaissances *a priori* plus ou moins fortes sur le défaut recherché. Toutefois, elle est rarement mise en oeuvre à partir de données expérimentales, et est peu compatible avec une exploitation industrielle, en particulier dans le domaine de l'END par courants de Foucault.

D'autres méthodes, plus pragmatiques, et abondamment employées, consistent à travailler à partir de base de données de défauts, soit pour restreindre l'espace d'investigation de l'inversion, soit encore pour procéder à une inversion « partielle » des signaux fournis par le système instrumental ; il s'agit alors d'identifier des défauts de types connus par comparaison de leur « signature » (signal en courants de Foucault typique fourni par le système instrumental pour un défaut donné) avec celles présentes dans la base de données. Il est procédé généralement de la façon suivante :

- extraction d'un ou plusieurs paramètres « pertinents » de la signature de défaut,
- à partir desquels, une estimation d'une ou plusieurs caractéristiques du défaut (présence, profondeur, longueur, etc...) est réalisée.

Une grande variété de paramètres et de techniques d'identification peut être employée. Une variante consiste à construire un modèle comportemental (boîte noire) des interactions système instrumental / défaut, par apprentissage toujours à partir d'une base de données. L'estimation d'un ou plusieurs paramètres du défaut considéré se fait par interpolation ou généralisation des configurations de défauts connus, par exemple à l'aide de réseaux neuronaux artificiels. Toutefois, les résultats d'inversion restent partiels, dans la mesure où cela ne remonte qu'à un nombre réduit de caractéristiques des défauts. Ces méthodes, efficaces lorsqu'il s'agit de détecter un défaut donné, ou bien de discerner des classes de défauts pré-définies, se montrent toutefois peu robustes lorsque des situations inattendues sont rencontrées (défaut trop éloigné de ceux contenus dans la base de données, données expérimentales bruitées), et ne permettent pas une estimation quantitative des défauts. En outre, elles nécessitent la création de base de données étendues (éventuellement difficiles à élaborer pour des géométries complexes) et la mise en oeuvre de techniques d'apprentissage, ainsi que des phases de calibration pour une utilisation expérimentale. Ces méthodes ne se présentent donc pas comme des solutions générales au problème de l'estimation de défaut par les courants de Foucault.

Une combinaison de ces deux approches a été proposée dans le document FR2885697. Elle consiste à procéder à une estimation linéaire des interactions système instrumental / défaut, dans le cas de défaut connus (modèle d'interactions estimé, calibration), puis à procéder à une estimation de défaut inconnus en résolvant le problème inverse linéarisé. A ce jour, cette approche ne s'avère probante que pour l'estimation de défauts débouchants de type entaille dont les propriétés sont proches de celles des défauts utilisés pour la calibration. Par ailleurs, le processus d'inversion présente les mêmes inconvénients que ceux exposés précédemment, liés aux problèmes de durée, de convergence et de robustesse du procédé itératif utilisé.

Le procédé selon l'invention permet de résoudre les problèmes évoqués ci dessus. Comme nous l'avons vu, le procédé selon l'invention s'appuie sur la méthode DPSM (décrite plus en détail dans les documents WO2004/044790 et WO2007/071735, auxquels il est possible de référer pour plus d'informations) pour laquelle les matrices de couplages qui modélisent les interactions dans les milieux peuvent être pré-calculées pour la configuration de la structure inspectée. Il en résulte que le procédé d'estimation de défauts selon l'invention peut être effectué en temps réel, au fil des acquisitions des images fournies par le système instrumental.

Par ailleurs, le procédé selon l'invention ne nécessite pas la constitution de bases de données de défaut, ni de connaissance a priori sur la forme et la position du défaut rencontré : simple à mettre en oeuvre, il résout le problème de robustesse vis à vis de situations atypiques.

Le procédé selon l'invention ne se réduit pas à l'estimation d'une ou plusieurs caractéristiques du défaut. Il opère une « reconstruction » tridimensionnelle du défaut, quelle qu'en soit la forme. Il présente donc une capacité de généralisation forte.

En outre, les premiers essais effectués à partir de données expérimentales en courants de Foucault (qui ont servis d'exemples pour décrire le procédé selon l'invention) ont prouvé la robustesse de la technique vis à vis du bruit de mesure.

Le procédé selon l'invention est donc parfaitement compatible avec une exploitation industrielle.

Enfin, il faut noter que le procédé selon l'invention peut être aisément enrichi par une approche multifréquence, impulsionnelle, multiorientation, et même multitechniques (courants de Foucault/ultrasons, Electrique / électromagnétique...), grâce au caractère générique de sa formulation. Toutefois, le procédé selon l'invention étant générique et multi physique, d'autres domaines d'applications de l'END sont aussi visés, tels que les techniques ultrasons, électrostatiques, acoustiques, thermiques, d'imagerie photothermique, etc..., ainsi que les techniques couplées (multiphysiques). Le domaine de la microscopie acoustique est également un domaine d'application immédiat de l'invention. En outre, cette technique trouvera des applications dans des domaines connexes, tels que l'imagerie RADAR ou SONAR, ou encore la géophysique...

Nous avons vu que le procédé selon l'invention diffère des techniques actuellement employées pour l'estimation de défaut dans les structures en cela :

- qu'il peut être exploité en temps réel (au cours des acquisitions de données)
- qu'il ne nécessite pas d'algorithme d'estimation itératif
- qu'il ne nécessite pas la construction de base de données de défauts
- qu'il ne nécessite pas de connaissance a priori sur la forme ou la localisation du défaut recherché
- qu'il est robuste au bruit des données expérimentales.
- qu'il peut être facilement automatisable.
- qu'il exploite de manière originale un modèle d'interaction onde/milieu lui - même original

Le procédé selon l'invention résout donc les problèmes liés au manque de robustesse, de difficulté de mise en oeuvre, et de manque de généralisation des techniques couramment employées. Il s'affranchit également des temps de calcul prohibitifs et de la nécessité de connaissance a priori qui rendent les méthodes les plus élaborées difficiles à mettre en oeuvre en contexte industriel.

Les avantages du procédé selon l'invention sont liés à ses performances (rapidité et capacité de généralisation de l'estimation de défaut) ainsi qu'à sa simplicité de mise en oeuvre. Le procédé selon l'invention pourra être facilement exploitable en contexte industriel, et présente des avantages très marqués en termes de sécurité (estimation quantitative de défaut dans les structures) et d'économie. Sur ce dernier point, un fort gain peut être attendu de l'utilisation du procédé selon l'invention, dans la mesure où une estimation rapide et quantitative des défauts permet de réduire les coûts et le nombre des inspections, ainsi que d'optimiser la maintenance et le cycle de vie des structures industrielles.

Bien entendu, il est possible d'apporter à l'invention de nombreuses modifications sans pour autant sortir du cadre de celle-ci.

**Revendications**

1. Procédé d'estimation quantitative de défauts éventuellement présents dans un objet (10) comportant au moins une surface extérieure (18), le procédé comportant des étapes de :

   a) « éclairage » de la surface extérieure de l'objet à l'aide un champ ondulatoire inductif (14) à une fréquence prédéterminée ; et

   b) relevé, au niveau de la surface extérieure de l'objet, d'un champ ondulatoire induit ($\vec{H}$) ; **caractérisé en ce qu'**il comprend en outre les étapes de :

   c) élaboration, à partir des propriétés du matériau formant l'objet, d'une matrice de couplage T associée à une profondeur Z de l'objet depuis la surface extérieure :

- en effectuant un maillage de l'objet et en associant à chacune des mailles élémentaires un point test situé au barycentre de la maille, et des points sources assimilés à des sources ponctuelles ; et

en résolvant des équations représentant la superposition des contributions de chaque source rayonnant dans l'objet, et vérifiant les conditions aux limites sur les points test issus du maillage ;

$$( \begin{bmatrix} \vec{H} \\ \vec{0} \\ \vec{0} \end{bmatrix} = T.\vec{J} )$$

d) résolution du système matricielle afin de déterminer un vecteur $\vec{J}$ à la profondeur Z $\vec{H}$ représentant le champ ondulatoire induit, T la matrice de couplage et $\vec{J}$ un vecteur représentatif de l'effet induit à la profondeur Z ;

e) extraction d'un sous-vecteur $\vec{J}_S$ du vecteur $\vec{J}$, correspondant à un éventuel défaut présent dans l'objet à la profondeur Z par détection de variations locales du vecteur $\vec{J}$; et

f) Estimation quantitative du défaut éventuel à partir du sous-vecteur $\vec{J}_S$ à la profondeur Z.

2. Procédé selon la revendication 1, **caractérisé en ce que**, lors de l'étape f), une sous-étape f1) de tamisage est effectuée afin de ne garder que les composantes du sous-vecteur $\vec{J}_S$ dont une phase et un module du champ ondulatoire induit à la profondeur Z, que ces composantes représentent, sont en accord avec ceux du champ ondulatoire inductif.

3. Procédé selon la revendication 1ou 2, **caractérisé en ce que**, pour une profondeur Z, les étapes a) à f) sont réalisées pour au moins deux orientations d'« éclairages » de la surface extérieure de l'objet à l'aide un champ ondulatoire inductif.

4. Procédé selon la revendication 3, **caractérisé en ce que** les au moins deux estimations obtenues selon les au moins deux « éclairages » sont fusionnées à l'aide d'une analyse en composantes principales pour obtenir une estimation quantitative du défaut éventuel à la profondeur Z.

5. Procédé selon l'une des revendications 1 à 4, **caractérisé en ce qu'**il comporte en outre une étape de reconstruction tridimensionnelle du défaut éventuel en répétant n fois les étapes a) à f) pour n profondeurs Z distinctes.

6. Procédé selon la revendication 5, **caractérisé en ce que**, lors de l'étape de reconstruction tridimensionnelle, une sous-étape préalable de tamisage progressif est effectuée pour réaliser les n estimations quantitatives.

7. Procédé selon la revendication 6, **caractérisé en ce que**, pour une itération p, 1<p<=n, au relevé du champ $\vec{H}(Z_p)$ est retranché tout ou partie $\vec{H}'_z(Z_{p-1})$ du relevé du champ $\vec{H}(Z_{p-1})$ tamisé, selon la formule $\vec{H}(Z_p)$ = $\vec{H}^{relevé}(Z_p)$-K.$\vec{H}'(Z_{p-1})$, où K est un coefficient de réinjection compris entre 0 et 1 et $\overline{H}^{relevé}(Z_p)$ est le relevé de l'étape b).

8. Procédé selon la revendication 7, **caractérisé en ce que** les composantes de $\vec{H}'_z(Z_{p-1})$ correspondent au défaut éventuel estimé lors de l'itération p-1, ou aux abords dudit défaut.

9. Procédé selon l'une des revendications 1 à 8, **caractérisé en ce que**, pour une profondeur Z donnée, il est associé une fréquence propre prédéterminée pour le champ ondulatoire inductif utilisé dans l'étape a).

10. Dispositif d'estimation quantitative de défauts éventuellement présents dans un objet (10) comportant des moyens d'émission (16) d'un champ ondulatoire inductif (14), des moyens d'enregistrement d'un relevé d'un champ ondulatoire induit (12 ;20) sur une surface (18) de l'objet, et des moyens de traitement destinés à mettre en oeuvre un procédé selon l'une des revendications 1 à 9.

**Patentansprüche**

1. Verfahren zur quantitativen Abschätzung möglicher Fehler in einem mindestens eine Außenoberfläche (18) aufweisenden Objekt (10), wobei das Verfahren die folgenden Verfahrensschritte umfasst:

a) "Beleuchtung" der Außenoberfläche des Objekts anhand eines induktiven Wellenfelds (14) bei einer vorbestimmten Frequenz, und

b) Ablesung eines induzierten Wellenfelds ($\vec{H}$) an der Außenoberfläche des Objekts, **dadurch gekennzeichnet, dass** es außerdem folgende Verfahrensschritte umfasst:

c) Erstellung einer Kupplungsmatrix T ausgehend von den Eigenschaften des das Objekt bildenden Materials, welche einer Tiefe Z des Objekts ab der Außenoberfläche zugeordnet ist:

- indem eine Vernetzung des Objekts durchgeführt wird und jeder Gitterzelle ein sich am Maschenschwerkpunkt befindlicher Testpunkt sowie mit Punktquellen gleichgestellte Quellpunkte zugeordnet werden; und indem Gleichungen gelöst werden, die die Überlagerung der Beiträge jeder in das Objekt abstrahlenden Quelle darstellen und die Randbedingungen an den Testpunkten aus der Vernetzung verifizieren;

$$\left(\begin{bmatrix}\vec{H}\\\vec{0}\\\vec{0}\end{bmatrix} = T.\vec{J}\right)$$

d) Auflösung des Matrixsystems $\begin{bmatrix}\vec{H}\\\vec{0}\\\vec{0}\end{bmatrix}$ zur Bestimmung eines Vektors $\vec{J}$ an der Tiefe Z, mit $\vec{H}$ das induzierte Wellenfeld, T die Kupplungsmatrix und $\vec{J}$ einer die an der Tiefe Z induzierte Wirkung darstellende Vektor;

e) Gewinnen eines Untervektors $\vec{J_s}$ des Vektors $\vec{J}$, entsprechend einem möglichen Fehler in dem Objekt an der Tiefe Z durch Erkennung von örtlichen Schwankungen des Vektors $\vec{J}$; und

f) quantitative Abschätzung des möglichen Fehlers ausgehend von dem Untervektor $\vec{J_s}$ an der Tiefe Z.

2. Verfahren nach Anspruch 1, **dadurch gekennzeichnet, dass** bei dem Verfahrensschritt f) ein Unterschritt f1) zum Sieben ausgeführt wird, um nur die Komponenten des Untervektors $\vec{J_s}$ zu behalten, wovon eine Phasenlage und ein an der Tiefe Z induziertes Wellenfeldmodul, die von diesen Komponenten dargestellt sind, mit jenen des induktiven Wellenfelds im Einklang stehen.

3. Verfahren nach Anspruch 1 oder 2, **dadurch gekennzeichnet, dass** für eine Tiefe Z die Verfahrensschritte a) bis f) für mindestens zwei Ausrichtungen zur "Beleuchtung" der Außenoberfläche des Objekts mittels eines induktiven Wellenfelds ausgeführt werden.

4. Verfahren nach Anspruch 3, **dadurch gekennzeichnet, dass** die wenigstens zwei gemäß den mindestens zwei "Beleuchtungen" erzielten Abschätzungen zur Erzielung einer quantitativen Abschätzung des möglichen Fehlers an der Tiefe Z anhand einer Hauptkomponentenanalyse zusammengeführt werden.

5. Verfahren nach einem der Ansprüche 1 bis 4, **dadurch gekennzeichnet, dass** es außerdem einen Verfahrensschritt zur dreidimensionalen Wiederherstellung des möglichen Fehlers umfasst, indem die Verfahrensschritte a) bis f) für n verschiedene Tiefen Z n-mal wiederholt werden.

6. Verfahren nach Anspruch 5, **dadurch gekennzeichnet, dass** bei dem Verfahrensschritt zur dreidimensionalen Wiederherstellung ein vorheriger Unterschritt zum schrittweisen Sieben durchgeführt wird, um die quantitativen n-Abschätzungen auszuführen.

7. Verfahren nach Anspruch 6, **dadurch gekennzeichnet, dass** bei einer Iteration p, wo 1<p<=n, die Ablesung des gesiebten Felds $\vec{H}(Z_p)$ ganz oder teilweise $\vec{H}'_z(Z_{p-1})$ von der Ablesung des Felds $\vec{H}(Z_{p-1})$ nach der Formel $\vec{H}(Z_p)=\vec{H}^{Ablesung}(Z_p) - K.\vec{H}'(Z_{p-1})$ abgezogen wird, wo K ein Zurückführungskoeffizient zwischen 0 und 1 und $\vec{H}^{Ablesung}(Z_p)$ die Ablesung am Verfahrensschritt b) sind.

8. Verfahren nach Anspruch 7, **dadurch gekennzeichnet, dass** die Komponenten von $\vec{H}'_z(Z_{p-1})$ dem möglichen, bei der Iteration p-1 abgeschätzten Fehler oder annähernd dem Fehler entsprechen.

9. Verfahren nach einem der Ansprüche 1 bis 8, **dadurch gekennzeichnet, dass** für eine gegebene Tiefe Z eine für das im Verfahrensschritt a) eingesetzte, induktive Wellenfeld vorbestimmte Eigenfrequenz zugeordnet ist.

10. Verfahren zur quantitativen Abschätzung möglicher Fehler in einem Objekt (10), das Sendeeinrichtungen (16) eines induktiven Wellenfelds (14), Aufnahmeeinrichtungen einer Ablesung eines induzierten Wellenfelds (12; 20) auf einer Oberfläche (18) des Objekts sowie Bearbeitungseinrichtungen zur Durchführung eines Verfahrens nach einem der Ansprüche 1 bis 9 umfasst.

**Claims**

1. Method for quantitatively estimating defects potentially present in an object (10) comprising at least one outer surface (18), the method comprises the steps of:

    a) "illuminating" the outer surface of the object with an inductive wave field (14) at a predetermined frequency;
    b) measuring, at the outer surface of the object, an induced wave field ($\vec{H}$); **characterised in that** it further comprises the steps of :
    c) developing, from the properties of the object's material, a coupling matrix T associated with a depth Z of the object from the outer surface:

    - by performing a meshing of the object and by associating to each elementary meshes a test point situated at the barycentre of the mesh, and sources points assimilated to point shaped sources; and
    by solving equations representing the superposition of the contributions of each radiating source in the object, and verifying limit conditions on the test points from the meshing;

    d) solving the matrix system $\left(\begin{bmatrix} \vec{H} \\ \vec{0} \\ \vec{0} \end{bmatrix} = T.\vec{J}\right)$ in order
    to determine a vector $\vec{J}$ at depth Z, $\vec{H}$ representing the induced wave field, T the coupling matrix and $\vec{J_s}$ a vector representative of the induce effect at the depth Z;
    e) extracting a sub-vector $\vec{J_s}$ of the vector $\vec{J}$, corresponding to a potential defect on the object at depth Z by detecting local variation of the vector $\vec{J}$; and
    f) quantitatively estimating the potential defect from the sub-vector $\vec{J_s}$ at depth Z.

2. Method according to claim 1, **characterised in that**, during step f), a sub-step f1) of screening is carried out in order to only keep the components of the sub-vector $\vec{J_s}$ of which a phase and a module of the induced wave field at depth Z, which said components represent, are in harmony with those of the inductive wave field.

3. Method according to claim 1 or 2, **characterised in that**, for a depth Z, the steps a) to f) are carried out for at least two "illuminating" orientations of the outer surface of the object with an inductive wave field.

4. Method according to claim 3, **characterised in that** the at least two estimations obtained according to the at least two "illuminations" are merged by means of a principal components analysis to obtain a quantitative estimation of the potential defect at depth Z.

5. Method according to one of claims 1 to 4, **characterised in that** it moreover comprises a step of three-dimensional reconstruction of the potential defect by repeating n times the steps a) to f) for n separate depths Z.

6. Method according to claim 5, **characterised in that**, during the step of three-dimensional reconstruction, a prior sub-step of progressive screening is carried out to perform the n quantitative estimations.

7. Method according to claim 6, **characterised in that**, for an iteration p, 1<p<=n, from the field measurement $\vec{H}(Z_p)$ is subtracted all or part $\vec{H'_z}(Z_{p-1})$ of the screened field measurement $\vec{H}(Z_{p-1})$, according to the formula $\vec{H}(Z_p) = \vec{H}^{relevé}(Z_p) - K.\vec{H'}(Z_{p-1})$, where K is a reinjection coefficient comprised between 0 and 1 and $\vec{H}^{relevé}(Z_p)$ is the measurement of step b) .

8. Method according to claim 7, **characterised in that** the components of $\vec{H'_z}(Z_{p-1})$ correspond to the potential defect estimated during the iteration p - 1, or to the edges of said defect.

9. Method according to one of claims 1 to 8, **characterised in that**, for a given depth Z, a specific predetermined frequency is associated for the inductive wave field used in step a).

10. Device for quantitatively estimating defects potentially present in an object (10) comprising means for emitting (16) an inductive wave field (14), means for recording a measurement of an induced wave field (12;20) on a surface (18) of the object, and processing means intended to implement a method according to one of claims 1 to 9.

**Real (Data)**

**FIG. 1**

**Imag (Data)**

**FIG. 2**

## FIG. 3

## FIG. 4

# FIG. 5

RE

(a)

IM

(b)

(c)

$J_{excY}$

10 mm

Y

O → X

(d)

## FIG. 6

# FIG. 7

(a)

(b)

(c)

(d)

# FIG. 8

## FIG. 9

## FIG. 10

(a)

(b)

## FIG. 11

**FIG. 12**

(a)

(b)

# FIG. 13

Zdef = -0.01 mm

Zdef = -0.51 mm

Zdef = -1.01 mm

Zdef = -1.51 mm

Zdef = -2.01 mm

Zdef = -2.51 mm

Zdef = -3.01 mm

## FIG. 14

Zdef = -0.01 mm

Zdef = -0.51 mm

Zdef = -1.01 mm

Zdef = -1.51 mm

Zdef = -2.01 mm

Zdef = -2.51 mm

Zdef = -3.01 mm

FIG. 15

(a)　　　　　　　　　　　(b)

EP 2 529 212 B1

FIG. 16

Défaut simulé

Profondeur en mm

0
-0.5
-1
-1.5

20
0
-20

-20
0
20

Axes X et Y en mm

## FIG. 17

### Champ synthétisé à la fréquence f1

### Champ synthétisé à la fréquence f2

### Champ synthétisé à la fréquence f3

**FIG. 18**

Module de Couche 1

Module de Couche 2

Module de Couche 3

Module de Couches 1.2.3

EP 2 529 212 B1

FIG. 19

Partie réelle Couche 1

Partie réelle Couche 2

Partie réelle Couche 3

Partie réelle Couches 1.2.3

EP 2 529 212 B1

**FIG. 20**

Abs Couche 1
inversion mono fréquence 1

Abs Couche 2
inversion mono fréquence 2

Abs Couche 3
inversion mono fréquence 3

Abs Couche 1.2.3
fréquence 1.2.3

## FIG. 21

**Partie imaginaire Couche 1**

**Partie imaginaire Couche 2**

**Partie imaginaire Couche 3**

**Partie imaginaire Couches 1.2.3**

EP 2 529 212 B1

FIG. 22

EP 2 529 212 B1

FIG. 23

44

## FIG. 24

22 · · · 24

Axe OZ

Axe OY

Axe OX

## FIG. 25

40 · · · 50

4mm

5mm

FIG. 26

## FIG. 27

## FIG. 28

## FIG. 29

## FIG. 30

$\theta = \pi/2$

1$^{\text{ère}}$ Mesure

2$^{\text{ème}}$ Mesure

| a | b | → 4 |
| c | d | → 12 |

8   6   10   8

## FIG. 31

1 capteur exité

Y

X

$a_t$  $a_{t+1}$  $a_{t+2}$

9 électrodes de mesure
→ 9 mesures

## FIG. 32

# FIG. 33 (a)

## Position des défauts (cercle) et défaut gélule

## Position des défauts (sphère) et défaut gélule

## FIG. 33 (b)

**Position des défauts (cercle) et défaut gélule**

**Position des défauts (sphère) et défaut gélule**

FIG. 34a

FIG. 34b

## FIG. 35a

Re(A1) inversion via M1

Im(A1) inversion via M1

abs(A1) inversion via M1

# FIG. 35b

Re(A1) inversion via M1

Im(A1) inversion via M1

abs(A1) inversion via M1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005001467 A
- WO 2007135265 A
- WO 2004044790 A
- WO 2007071735 A
- FR 2885697